# EUROPÄISCHE PATENTANMELDUNG

(11) **EP 4 686 967 A1**
(43) Veröffentlichungstag der Anmeldung: **04.02.2026**
(21) Anmeldenummer: 25191660.7
(22) Anmeldetag: 24.07.2025
(51) Int. Cl.: G02B 6/38

(54) **FASEROPTISCHER ADAPTER, SCHUTZEINHEIT, VERFAHREN ZUR HERSTELLUNG EINES FASEROPTISCHEN ADAPTERS**

(30) Priorität: 30.07.2024 DE 102024121724
(71) Anmelder: Reichle & De-Massari AG, 8620 Wetzikon (CH)
(72) Erfinder: Gyagang, Tensing, 8810 Horgen (CH); Graf, Thomas, 8808 Pfäffikon (CH); Streiff, Claudio, 8610 Uster (CH)
(74) Vertreter: Daub, Thomas

(57) **Zusammenfassung**

Die Erfindung geht aus von einem faseroptischen Adapter (10a-f) mit zumindest einem Grundgehäuse (60a-f), welches zumindest eine Steckerverbindungsöffnung (78a-f, 80a-f, 82a-f, 84a-f) zum Einführen eines Steckers (12a-f) in das Grundgehäuse (60a-f) aufweist, und mit einer an dem Grundgehäuse (60a-f) angeordneten Schutzeinheit (20a-f, 22a-f), welche zumindest ein Staubschutzverschlusselement (24a-f, 26a-f) zu einem staubdichten Verschließen der Steckerverbindungsöffnung (78a-f, 80a-f, 82a-f, 84a-f) aufweist.

Es wird vorgeschlagen, dass das Staubschutzverschlusselement (24a-f, 26a-f) federelastisch und in eine Verschlussposition des Staubschutzverschlusselements (24a-f, 26a-f) an der Steckerverbindungsöffnung (78a-f, 80a-f, 82a-f, 84a-f) selbstrückstellend ausgebildet ist.

## Beschreibung

### Stand der Technik

Die Erfindung betrifft einen faseroptischen Adapter nach dem Oberbegriff des Anspruchs 1, eine Schutzeinheit nach Anspruch 16 und ein Verfahren zur Herstellung eines faseroptischen Adapters nach dem Oberbegriff des Anspruchs 17.

Aus dem Stand der Technik sind bereits faseroptische Adapter mit einer Staubkappe, welche als ein abnehmbarerer Stopfen die Steckerverbindungsöffnung verschließen, bekannt.

Ferner sind aus dem Stand der Technik bereits faseroptische Adapter mit einer Schutzeinheit, welche ein als verschließbare harte Klappe ausgebildetes Staubschutzverschlusselement aufweisen, bekannt.

Die Aufgabe der Erfindung besteht insbesondere darin, einen gattungsgemäßen faseroptischen Adapter mit verbesserten Eigenschaften hinsichtlich einer Zuverlässigkeit bereitzustellen. Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

### Vorteile der Erfindung

Die Erfindung geht aus von einem faseroptischen Adapter mit zumindest einem Grundgehäuse, welches zumindest eine Steckerverbindungsöffnung zum Einführen eines Steckers in das Grundgehäuse aufweist, und mit einer an dem Grundgehäuse angeordneten Schutzeinheit, welche zumindest ein Staubschutzverschlusselement zu einem staubdichten Verschließen der Steckerverbindungsöffnung aufweist.

Es wird vorgeschlagen, dass das Staubschutzverschlusselement federelastisch und in eine Verschlussposition des Staubschutzverschlusselements an der Steckerverbindungsöffnung selbstrückstellend ausgebildet ist.

Durch die erfindungsgemäße Ausgestaltung kann vorteilhaft ein faseroptischer Adapter mit einer erhöhten Zuverlässigkeit bereitgestellt werden, da vorteilhaft bei einer Abwesenheit eines Steckers in der Steckerverbindungsöffnung, die für die Kopplung eines optischen Steckers vorgesehen ist, eine Ansammlung von Staub und/oder weiteren Fremdkörpern verhindert werden kann. Ferner kann vorteilhaft eine Leistungsfähigkeit des faseroptischen Adapters optimiert werden, da eine Signalverbindungsbeeinträchtigung zwischen zwei Steckern über den Adapter durch Staub und/oder Fremdkörper verhindert werden kann. Weiterhin kann vorteilhaft eine Haltbarkeit des faseroptischen Adapters erhöht werden. Zudem kann vorteilhaft eine Bedienerfreundlichkeit erhöht werden, insbesondere aufgrund der Federelastizität des Staubschutzverschlusselements, die eine Selbstrückstellung bereitstellt, sodass ein Bediener ohne eigenes Zutun die Steckerverbindungsöffnung staubdicht verschließt. Damit wird weiterhin vorteilhaft eine Betriebssicherheit des faseroptischen Adapters erhöht, denn eine mögliche fehlerhafte Bedienung des Staubschutzverschlusselements wird reduziert.

Der faseroptische Adapter weist vorzugsweise zumindest eine, besonders bevorzugt zumindest zwei gegenüberliegende, Steckerverbindungsöffnungen auf, welche insbesondere zur Aufnahme eines Steckers, besonders bevorzugt zumindest zwei gegenüberliegende Stecker, vorgesehen ist/sind. Vorzugsweise ist der faseroptische Adapter zu einer Kopplung von zumindest zwei gegenüberliegenden Steckern vorgesehen, vorzugsweise sodass ein optisches Signal von dem zumindest einem Stecker zu dem zumindest einen weiteren Stecker übertragbar ist. Vorzugsweise ist der faseroptische Adapter, insbesondere die Steckerverbindungsöffnung, für Steckverbindungen mit LWL-Steckern, besonders bevorzugt LC-Steckern, vorgesehen, die insbesondere einen kleinen Formfaktor aufweisen. Grundsätzlich ist eine Ausgestaltung des faseroptischen Adapters, insbesondere der Steckerverbindungsöffnung, für die Aufnahme weiterer Stecker denkbar, insbesondere FC-Stecker, SC-Stecker, FDI-Stecker, ST-Stecker oder weitere, von einem Fachmann als sinnvoll erscheinende Stecker denkbar. Insbesondere ist der faseroptische Adapter zur Verbindung zwischen optischen Leitern eines faseroptischen Kommunikationssystems vorgesehen, wobei insbesondere Enden von optischen Leitern, insbesondere Glasfaserkabeln, vorzugsweise von Singlemode-Faser-Kabel und/oder Multimode-Faser-Kabel, zweier gegenüberliegender Stecker, verbunden sind, vorzugsweise sodass ein optisches Signal zwischen den optischen Leitern übertragbar ist. Der faseroptische Adapter ist vorzugsweise zu einem Einsetzen in ein Rangierfeld und/oder einem Patchpanel vorgesehen. Insbesondere ist der faseroptische Adapter Teil eines Adaptersystems, wobei der faseroptische Adapter vorzugsweise in dem Rangierfeld und/oder dem Patchpanel angeordnet ist. Vorzugsweise ist der faseroptische Adapter, insbesondere das Grundgehäuse, zumindest im Wesentlichen aus Kunststoff, insbesondere als Spritzgussteil. Alternativ oder zusätzlich ist der faseroptische Adapter insbesondere das Grundgehäuse, zumindest zu einem Teil aus Edelstahl, Aluminium, Keramik, einem Verbundmaterial und/oder einem weiteren einem Fachmann als sinnvoll erscheinendem Material.

Die Schutzeinheit und das Staubschutzverschlusselement ist zu einem staubdichten Verschließen der Steckerverbindungsöffnung vorgesehen, wobei insbesondere das Staubschutzverschlusselement in der Verschlussposition ein Eindringen von Fremdkörpern, insbesondere Staub, Schmutz oder andere Umweltkontaminanten, zumindest im Wesentlichen verhindert. Insbesondere verschließt das Staubschutzverschlusselement die Steckerverbindungsöffnung zumindest im Wesentlichen vollständig, sodass ein Eindringen von Fremdkörpern in den Innenraum des faseroptischen Adapters von sämtlichen Seiten, insbesondere der Steckerverbindungsöffnung, verhindert ist. Vorzugsweise weist der faseroptische Adapter in der Verschlussposition des Staubschutzverschlusselements nach der DIN EN 60529 (VDE 0470-1):2014-09, insbesondere zumindest im Hinblick auf den Schutz gegen Fremdkörper, vorzugsweise zumindest die Klasse IP3X, vorteilhaft mindestens die Klasse IP4X, besonders bevorzugt zumindest die Klasse IP5X und besonders vorteilhaft zumindest die Klasse IP6X, auf.

Besonders bevorzugt ist die Schutzeinheit, insbesondere das Staubschutzverschlusselement, auf einer Innenseite der Steckerverbindungsöffnung, insbesondere innerhalb des Grundgehäuses angeordnet. Vorzugsweise ist der Stecker bei einem Einführen vorerst in der Steckerverbindungsöffnung und anschließend im Kontakt mit der Schutzeinheit, insbesondere dem Staubschutzverschlusselement. Vorzugsweise ist das Staubschutzverschlusselement federelastisch, insbesondere automatisch, in eine Öffnungsposition des Staubschutzverschlusselements ausgestaltet. Insbesondere ist das Staubschutzverschlusselement bei Anwendung einer äußeren Kraft, vorzugsweise dem Einstecken des Steckers oder eines anderen Verbindungselements, vorformbar ausgestaltet, wobei insbesondere eine Form des Staubschutzelements, welches sich über die Steckerverbindungsöffnung erstreckt, sich verändert. Vorzugsweise ist das Staubschutzverschlusselement durch die Federelastizität, insbesondere der Verformbarkeit, dazu vorgesehen, einen Zugang in den Innenraum des faseroptischen Adapters, insbesondere den Innenraum des Grundgehäuses, vorzugsweise für den Stecker oder ein weiteres Verbindungselement, bereitzustellen. Insbesondere ist das Staubschutzverschlusselement dazu vorgesehen, bei dem Einführen des Steckers sich von der Verschlussposition zu einer Öffnungsposition zu bewegen, in welcher der Stecker mit dem faseroptischen Adapter verbunden ist.

Vorzugsweise ist das Staubschutzverschlusselement dazu vorgesehen, bei dem Abhandensein einer äußeren Kraft, insbesondere bei dem Entfernen der äußeren Kraft, vorzugsweise bei dem Entfernen des Steckers oder eines weiteren Verbindungselements aus dem Innenraum des faseroptischen Adapters, insbesondere des Grundgehäuses, selbstrückstellend, insbesondere automatisch, vorzugsweise aufgrund der Federelastizität des Staubschutzverschlusselements, in die Verschlussposition des Staubschutzverschlusselements zurückzukehren. Besonders bevorzugt ist das Staubschutzverschlusselement dauerelastisch ausgeführt. Damit kann vorteilhaft eine wiederholte Anwendung des Staubschutzverschlusselements zumindest im Wesentlichen ohne Verschleiß oder Verlust der Dichtungsfähigkeit bereitgestellt werden.

Besonders bevorzugt weist das Staubschutzverschlusselement federelastische Materialeigenschaften auf, welche die Selbstrückstellung bereitstellen. Vorzugsweise besteht das Staubschutzverschlusselement aus Stahl und/oder Gummi und/oder einem weiteren Material mit federelastischen Eigenschaften. Besonders bevorzugt ist das Staubschutzverschlusselement, insbesondere aufgrund der Federelastizität, von einer Verschlussposition aus, vorzugsweise klappenähnlich, ausgehend von einer Kante der Steckerverbindungsöffnung, aufbiegbar. Vorzugsweise weist das Staubschutzverschlusselement eine Schwenkachse auf, welche zumindest im Wesentlichen parallel zu einer Hauptkante der Steckerverbindungsöffnung, vorzugsweise bei einer Betrachtung des faseroptischen Adapters entlang einer Einsteckachse auf Höhe der Hauptkante der Steckerverbindungsöffnung, und insbesondere senkrecht zu der Einsteckachse ist. Besonders bevorzugt weist das Staubschutzverschlusselement lediglich eine Schwenkachse auf. Insbesondere ist die Schwenkachse an einer vertikalen Wandung des faseroptischen Adapters, die insbesondere parallel zu einer vertikalen Kante des Steckers ist. Vorzugsweise erstreckt sich das Staubschutzverschlusselement, in der Verschlussposition, insbesondere einteilig, zumindest im Wesentlichen vollständig, über die Steckerverbindungsöffnung, insbesondere vollständig über eine Horizontale und/oder Vertikale der Steckerverbindungsöffnung, vorzugsweise bei einer Betrachtung entlang der Einsteckachse, der Steckerverbindungsöffnung. Besonders bevorzugt ist ein schwenkendes Ende des Staubschutzverschlusselements, vorzugsweise bildend einen Vertikal-Endbereich, zumindest in der Verschlussposition an einer Wandung des Grundgehäuses anliegend, insbesondere zumindest im Wesentlichen anliegend an eine, der vertikalen Wandung, gegenüberliegenden Wandung angeordnet.

Unter "vorgesehen" soll hier und im Folgenden speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass die Schutzeinheit zumindest ein Laserschutzelement aufweist, wobei das Laserschutzelement einstückig mit dem

Staubschutzverschlusselement ausgebildet ist. Dadurch kann vorteilhaft ein Laserschutz für einen Bediener bereitgestellt werden und insbesondere eine Bedienersicherheit erhöht werden. Dabei kann vorteilhaft das Austreten von Licht eines bereits verbundenen Steckers in einer weiteren Steckerverbindungsöffnung des faseroptischen Adapters, das insbesondere die Augen des Bedieners schädigen würde, verhindert werden. Weiterhin kann vorteilhaft möglichst platzsparend ein Laserschutz und ein Staubschutz in den faseroptischen Adapter integriert werden. Insbesondere ist das Laserschutzelement federelastisch und in einer Verschlussposition des Laserschutzelements an der Steckverbindungsöffnung selbstrückstellend ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder besonders vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Insbesondere bildet das Staubschutzverschlusselement zumindest im Wesentlichen auch das Laserschutzelement aus. Insbesondere unterscheidet sich das Staubschutzverschlusselement von dem Laserschutzelement lediglich in dessen Funktionen. Insbesondere ist das Laserschutzelement dazu vorgesehen, ein Austreten von optischen Signalen, insbesondere Lichtstrahlen, aus dem Innenraum des faseroptischen Adapters, insbesondere des Grundgehäuses, vorzugsweise von einem weiteren Stecker, der mit dem faseroptischen Adapter verbunden ist, zu verhindern. Vorzugsweise ist das Laserschutzelement aus einem für Laserlicht bei zu erwartenden Wellenlängen intransparenten Material, welches zur Bereitstellung von Laserschutzeigenschaften Licht innerhalb des Grundgehäuses reflektiert und/oder absorbiert.

Weiterhin wird vorgeschlagen, dass das Staubschutzverschlusselement in der Verschlussposition elastisch vorgespannt ist. Dadurch kann vorteilhaft ein staubdichtes Verschließen der Steckerverbindung weiter verbessert werden. Ferner können vorteilhaft Laserschutzeigenschaften verbessert werden. Insbesondere ist das Laserschutzelement in der Verschlussposition elastisch vorgespannt. Darunter, dass das Staubschutzverschlusselement "vorgespannt" ist soll insbesondere verstanden werden, dass das Staubschutzverschlusselement in der Verschlussposition kontinuierlich Kraft auf eine Anschlagsfläche des Grundgehäuses ausübt, wobei insbesondere bei einem theoretischen Entfernen der Anschlagsfläche sich das Staubschutzverschlusselement über eine Verschlussposition hinaus in Richtung eines Steckereingangs der Steckerverbindungsöffnung bewegen würde. Insbesondere ist zumindest ein Teil des vorgespannten Staubschutzverschlusselements im montierten Zustand aus einer kräftefreien Grundposition, die der Teil im unmontierten Zustand einnehmen würde, ausgelenkt. Vorzugsweise wird die Verschlussposition des Staubschutzverschlusselements und/oder des Laserschutzelements durch die Anschlagsflächen definiert, von welchen das Staubschutzverschlusselement und/oder das Laserschutzverschlusselement vorzugsweise bei einem Einführen eines Steckers in den Steckerverbindungsöffnungen federelastisch selbstrückstellend ausgebildet sind.

Zudem wird vorgeschlagen, dass die Schutzeinheit als ein monolithisches Bauteil, insbesondere Blechbiegeteil oder Blechstanzbiegeteil, ausgebildet ist. Dadurch kann vorteilhaft ein Laserschutz und ein Staubschutz möglichst platzsparend in dem faseroptischen Adapter, insbesondere in dem Grundgehäuse angeordnet werden. Ferner kann vorteilhaft eine Selbstrückstellung des Staubschutzverschlusselements und/oder des Laserschutzelements möglichst einfach bereitgestellt werden. Unter einem "monolithischen Bauteil" soll insbesondere ein Bauteil verstanden werden, welches eine einheitliche, kontinuierliche Struktur aufweist, welche insbesondere frei von Zusammenfügungen oder Verbindungen separater Komponenten geformt ist. Insbesondere ist die Schutzeinheit als Blechbiegeteil ausgebildet, wobei die Schutzeinheit aus einem einzelnen Blech besteht, wobei vorzugsweise die Form der Schutzeinheit durch einen Biegeprozess in die spezifische Form gebogen ist. Vorzugsweise bildet das monolithische Bauteil, insbesondere das Blechbiegeteil, das Staubschutzverschlusselement und/oder das Laserschutzelement, wobei vorzugsweise die Federelastizität des Staubschutzverschlusselements und/oder Laserschutzelements durch die Materialeigenschaften des monolithischen Bauteils, insbesondere des Blechbiegeteils, bereitgestellt werden. Vorzugsweise ist die Schutzeinheit, insbesondere das Staubschutzverschlusselement und/oder das Laserschutzelement, dazu vorgesehen, durch das Verbiegen des Blechbiegeteils ein Einführen des Steckers zu ermöglichen.

Ferner wird vorgeschlagen, dass der faseroptische Adapter eine Führungseinheit zur Führung des Steckers bei einem Einführen des Steckers in das Grundgehäuse aufweist, mit zumindest einem Horizontalführungselement, welches durch das Staubschutzverschlusselement gebildet ist. Dadurch kann vorteilhaft ein möglichst stabiles Einführen, insbesondere mit einer innerhalb des Grundgehäuses angeordneten Schutzeinheit, bereitgestellt werden. Ferner kann dadurch vorteilhaft ein links oder rechts Auslenken des Steckers wirksam verhindert werden. Vorzugsweise ist das Horizontalführungselement und das Staubschutzverschlusselement und/oder das Laserschutzelement identisch, wobei sich das Horizontalführungselement und das Staubschutzverschlusselement und/oder das Laserschutzelement vorzugsweise lediglich in deren Funktion unterscheiden. Vorzugsweise ist das Horizontalführungselement dazu vorgesehen, bei dem Einführen des Steckers, sich insbesondere kontinuierlich zu biegen und vorzugsweise sich entlang einer Grundgehäusewandung entlang zu strecken. Vorzugsweise weist das Grundgehäuse, insbesondere eine Wandung, entlang welcher das Horizontalführungselement kontinuierlich biegbar ausgestaltet ist, Führungselemente, beispielsweise Ausbuchtungen und/oder Rundungen, auf, sodass bei dem Einführen des Steckers, das Horizontalführungselement dazu vorgesehen ist, ein Verschieben des Steckers senkrecht zu der Einsteckachse in der horizontalen Ebene zu verhindern. Insbesondere ist das Horizontalführungselement dazu ausgebildet, bei dem Einführen des Steckers sich über die Führungselemente zu biegen und damit vorzugsweise eine Führung des Steckers bereitzustellen. Insbesondere ist das Horizontalführungselement dazu vorgesehen, gemeinsam mit den Führungselementen den Stecker in einer horizontalen Ebene des Grundgehäuses einzuspannen.

Vorzugsweise ist ein horizontales Element, insbesondere eine horizontale Ebene und/oder eine horizontale Achse, insbesondere wenn nicht weiter definiert, ein Element, eine Ebene und/oder Achse, das/die zumindest näherungsweise parallel zu einer Haupterstreckungsebene des faseroptischen Adapters, wobei die Haupterstreckungsebene insbesondere parallel zu einer größten Seitenfläche eines kleinsten gedachten Quaders ist, welcher den faseroptischen Adapter gerade noch vollständig umschließt, und insbesondere durch den Mittelpunkt des Quaders verläuft. Besonders bevorzugt ist ein horizontales Element, eine horizontale Ebene und/oder eine horizontale Achse zumindest näherungsweise senkrecht zu einer Schwenkachse des Staubschutzverschlusselements. Vorzugsweise ist ein vertikales Element, insbesondere eine vertikale Ebene und/oder eine vertikale Achse, insbesondere wenn nicht weiter definiert, ein Element, eine Ebene und/oder Achse, das/die zumindest näherungsweise senkrecht zu einer Haupterstreckungsebene des faseroptischen Adapters ist. Besonders bevorzugt ist ein vertikales Element, eine vertikale Ebene und/oder eine vertikale Achse zumindest näherungsweise parallel zu der Schwenkachse des Staubschutzverschlusselements.

Zudem wird vorgeschlagen, dass das Grundgehäuse zumindest eine weitere Steckerverbindungsöffnung aufweist, wobei die weitere Steckerverbindungsöffnung mit einem weiteren Staubschutzverschlusselement der Schutzeinheit staubdicht verschließbar ist. Dadurch kann vorteilhaft ein staubdichtes Verschließen für zumindest zwei nebeneinandergeordnete Stecker oder einen Duplex-Stecker bereitgestellt werden. Besonders bevorzugt ist der faseroptische Adapter als ein Duplex-Adapter ausgebildet, wobei vorzugsweise in dem Grundgehäuse auf einer Seite die zwei Steckerverbindungsöffnungen nebeneinander angeordnet sind und die Aufnahme von genormten Duplex-Steckern, beispielsweise eines genormten Duplex-Steckers vom Typ "LC", bereitstellen. Insbesondere weist das Grundgehäuse zwischen der Steckerverbindungsöffnung und der weiteren Steckerverbindungsöffnung eine Trennwand auf. Vorzugsweise weist die Trennwand die Führungselemente für das Horizontalführungselement auf. Insbesondere ist die Schwenkachse des Staubschutzverschlusselements und/oder des Laserschutzelements auf der Seite der Steckerverbindungsöffnung, die die Trennwand bildet, vorzugsweise ist die Schwenkachse zumindest näherungsweise in einer durch die Trennwand gebildeten Haupterstreckungsebene. Vorzugsweise ist die weitere Steckerverbindungsöffnung und/oder das weitere Staubschutzverschlusselement identisch zu der Steckerverbindungsöffnung und/oder das Staubschutzverschlusselement ausgebildet und weist vorzugsweise sämtliche Elemente deren auf, wobei vorzugsweise die weitere Steckerverbindungsöffnung und/oder das weitere Staubschutzverschlusselement in Bezug auf eine durch die Haupterstreckungsebene der Trennwand gebildete Spiegelebene spiegelsymmetrisch zu der Steckerverbindungsöffnung und/oder dem Staubschutzverschlusselement ausgebildet sind. Insbesondere bildet die Schutzeinheit als monolithisches Bauteil, insbesondere Blechbiegeteil, das Staubschutzverschlusselement und das weitere Staubschutzverschlusselement und vorzugsweise das Laserschutzelement und ein weiteres Laserschutzelement. Vorzugsweise ist die Schutzeinheit, insbesondere ein Querschnitt der Schutzeinheit, zumindest näherungsweise V-förmig ausgebildet, wobei das Staubschutzverschlusselement und das weitere Staubschutzverschlusselement vorzugsweise jeweils einen Arm der V-Form bilden, die insbesondere konvex gegeneinander ausgehend von der Trennwand über die Steckerverbindungsöffnung ragen. Insbesondere weist die Schutzeinheit ein Befestigungselement auf, welches vorzugsweise einstückig mit dem Staubschutzverschlusselement und dem weiteren Staubschutzverschlusselement verbunden ist. Vorzugsweise ist das Befestigungselement dazu vorgesehen, die Schutzeinheit, insbesondere das Staubschutzverschlusselement und/oder das weitere Staubschutzverschlusselement in dem Grundgehäuse zu befestigen. Besonders bevorzugt ist das Staubschutzverschlusselement, vorzugsweise das Befestigungselement der Schutzeinheit, welches direkt in das Staubschutzverschlusselement übergeht, um eine proximale Endkante der Trennwand, umgelegt und die Steckerverbindungsöffnungen abdeckend ausgebildet, wobei zumindest die Trennwand vorzugsweise dazu vorgesehen ist, auf das Staubschutzverschlusselement einwirkende Kräfte, insbesondere durch einen Stecker und/oder durch die elastische Vorspannung in der Verschlussposition, aufzunehmen.

Ferner weist das Staubschutzverschlusselement vorzugsweise eine Form, insbesondere eine Dicke und/oder Höhe, auf, die eine zumindest näherungsweise gleichmäßig verteilte Einsteckkraft für einen Schwenkvorgang des Staubschutzverschlusselements auf einem gesamten Einsteckweg des Steckers bereitstellt. Dadurch kann vorteilhaft ein Einsteckverhalten und eine damit verbundene Bedienerfreundlichkeit verbessert werden. Insbesondere weist das Staubschutzverschlusselement, insbesondere der Querschnitt des Staubschutzverschlusselements, entlang der horizontalen Erstreckung des Staubschutzverschlusselements betrachtet, insbesondere ausgehend von der Trennwand, zumindest ein Bogenteil und zumindest ein Linearteil auf, vorzugsweise zumindest zwei Bogenteile und zumindest zwei, besonders bevorzugt zumindest drei, Linearteile auf, wobei zumindest der erste Linearteil vorzugsweise an der Trennwand anliegend ausgebildet ist und wobei insbesondere der erste Bogenteil zumindest im Wesentlichen ausgehend von der Trennwand ausgebildet ist und der zweite Bogenteil zumindest näherungsweise in einem Mittelbereich der Steckerverbindungsöffnung, insbesondere in einem Mittelbereich der horizontalen Erstreckung des Staubverschlusselements, ausgebildet ist. Vorzugsweise ist der zumindest eine Bogenteil bei einem Einsteckvorgang dazu vorgesehen, ein Aufbiegen des Staubschutzverschlusselements bereitzustellen, wobei insbesondere der zumindest eine Bogenteil, vorzugsweise das gesamte Staubschutzverschlusselement, zumindest näherungsweise linear ist, wenn ein Stecker vollständig in der Steckerverbindungsöffnung ist. Ein Zentriwinkel des zumindest einen Bogenteils, insbesondere des ersten Bogenteils, ist in der Verschlussposition des Staubschutzverschlusselements, insbesondere ausgehend von einer Bogenteiltangente, die zumindest näherungsweise parallel zu der Einsteckachse ist, insbesondere zwischen 90° und 10°, vorzugsweise zwischen 75° und 25°, vorteilhaft zwischen 60° und 35°, besonders bevorzugt zwischen 50° und 40° und besonders vorteilhaft zumindest näherungsweise 45° und insbesondere ist ein Zentriwinkel des zweiten Bogenteils insbesondere zwischen 80° und 5°, vorzugsweise zwischen 70° und 20°, vorteilhaft zwischen 50° und 30° und besonders bevorzugt zwischen 40° und 35°. Der zumindest eine Bogenteil erstreckt sich über eine Länge des Staubschutzverschlusselements von insbesondere zwischen 40 % und 1 %, vorzugsweise zwischen 30 % und 5 % und besonders bevorzugt zwischen 20 % und 10 %. Mit den zumindest zwei Bogenteilen und den zumindest zwei Linearteilen kann vorteilhaft eine Länge des Staubschutzverschlusselements, insbesondere im Vergleich zu einem rein bogenförmigen Staubschutzverschlusselement, reduziert werden.

Ferner wird vorgeschlagen, dass das Staubschutzverschlusselement eine Form aufweist, welche ein bezüglich einer Ferrule des Steckers und dem Staubschutzverschlusselement berührungsfreies Einführen des Steckers in das Grundgehäuse ermöglicht. Dadurch kann vorteilhaft während des Einsteckvorgangs des Steckers eine stabile Positionierung der Ferrule bereitgestellt werden, womit vorteilhaft eine Verbesserung der Zuverlässigkeit und Präzision der Verbindung erreicht werden kann. Zudem reduziert diese Stabilität vorteilhaft das Risiko mechanischer Beschädigungen sowohl an der Ferrule als auch am Adapter, was vorteilhaft zu einer längeren Lebensdauer und zu geringeren Wartungskosten führt. Besonders bevorzugt ermöglicht der zumindest eine Bogenteil und der zumindest eine Linearteil des Staubschutzverschlusselements das berührungsfreie Einführen des Steckers bezüglich der Ferrule. Vorzugsweise ist das Staubschutzverschlusselement während des Einsteckvorgangs lediglich mit einer Kante des Steckers in Kontakt, wobei vorzugsweise das Horizontalführungselement über die Kante den Stecker horizontal führt.

Zudem wird vorgeschlagen, dass der faseroptische Adapter die Führungseinheit zur Führung des Steckers bei einem Einführen des Steckers in das Grundgehäuse aufweist, wobei das Grundgehäuse eine Vertikalführungsfläche aufweist, welche zumindest eine öffnungsseitig angeordnete Fase aufweist. Dadurch kann vorteilhaft über den gesamten Einsteckweg des Steckers eine normgerechte, optimale Führung, gewährleistet werden, vorteilhaft obwohl innerhalb des Grundgehäuses das schwenkbare Staubschutzverschlusselement angeordnet ist. Ferner kann vorteilhaft durch die Fasen wirksam ein Hängenbleiben des Steckers beim unbewusst schrägen Einführen verhindert werden. Insbesondere ist die Vertikalführungsfläche dazu vorgesehen, eine Auflagefläche für den Stecker, insbesondere entlang des Einsteckwegs des Steckers, zu bilden. Vorzugsweise ist die Vertikalführungsfläche zu einer Führung des Steckers auf der Seite des Grundgehäuses vorgesehen, welche eine Rastaufnahme für ein Rastelement, insbesondere Rastnasensystem, des Steckers, ausbildet, wobei die Vertikalführungsfläche vorzugsweise verschieden von einer Horizontalaußenwandung des Grundgehäuses ausgebildet ist. Insbesondere grenzt die Vertikalführungsfläche an, insbesondere lediglich, eine Vertikalaußenwandung des Grundgehäuses an und bildet vorzugsweise lediglich eine Auflagefläche für einen Kantenbereich des Steckers.

Die Vertikalführungsfläche erstreckt sich über insbesondere zumindest 50 %, vorzugsweise zumindest 60 % und besonders bevorzugt zumindest 75 % einer zu einem Einsteckweg parallelen Länge des Grundgehäuses. Dadurch kann vorteilhaft eine normierte Steckerführung über eine längere Distanz unterbrochen bereitgestellt werden, was vorteilhaft zu weniger Fehlfunktionen führt und totales Versagen der Verbindung verhindert. Insbesondere weist die Vertikalführungsfläche zumindest eine Unterbrechung, vorzugsweise für den Schwenkbereich des Staubschutzverschlusselements, auf, wobei im Anschluss der Unterbrechung die Vertikalführungsfläche jeweils eine weitere öffnungsseitig angeordnete Fase aufweist.

Darüber hinaus wird vorgeschlagen, dass ein Grundrahmen des Grundgehäuses die Steckerverbindungsöffnung in Einsteckrichtung betrachtet von vier Seiten begrenzt. Dadurch kann vorteilhaft die Stabilität des Steckers in dem faseroptischen Adapter verbessert werden, womit vorteilhaft bei der Kupplung IL-Probleme, insbesondere bei mechanischer Belastung reduziert werden können. Vorzugsweise ist das Grundgehäuse so ausgestaltet, dass der Grundrahmen an dem Steckereingang des Grundgehäuses angeordnet ist, der den Stecker in Einsteckrichtung betrachtet von vier Seiten begrenzt, insbesondere in dem Steckereingang in allen zur Einsteckachse senkrechten Richtungen stützt. Unter "begrenzt" soll in diesem Zusammenhang insbesondere verstanden werden, dass der Grundrahmen mit dem Stecker während des Einsteckvorgangs und in einem vollständig verbundenen Zustand auf allen vier Seiten zumindest abschnittsweise direkten Kontakt mit dem Stecker aufweist. Vorzugsweise erstreckt sich der Grundrahmen über zumindest einen Teilbereich der Steckerverbindungsöffnung, insbesondere des Einsteckwegs, insbesondere zumindest 5 %, vorzugsweise mindestens 10 %, vorteilhaft zumindest 15 % und besonders bevorzugt mindestens 20 % der Steckerverbindungsöffnung, insbesondere des Einsteckwegs, wobei der Grundrahmen vorzugsweise durchgehend Kontakt mit allen vier Seiten des Steckers aufweist.

Ferner wird vorgeschlagen, dass das Grundgehäuse eine, insbesondere über eine zumindest im Wesentlichen gesamte Vertikalerstreckung des Staubschutzverschlusselements erstreckte, Vertikalanschlagsfläche für den Vertikal-Endbereich des Staubschutzverschlusselements in der Verschlussposition ausbildet.

Dadurch kann vorteilhaft ein staubdichtes Verschließen des Staubschutzverschlusselements weiter optimiert werden. Besonders bevorzugt ist die Vertikalanschlagsfläche mit dem Vertikal-Endbereich des Staubschutzverschlusselements dazu vorgesehen, den Innenbereich zumindest im Hinblick auf die Vertikalaußenwandung des Grundgehäuses, insbesondere in Bezug auf ein Eindringen von Staub, zu verschließen. Insbesondere ist der Vertikal-Endbereich ein ein freies Ende aufweisender Endbereich des Staubschutzverschlusselements. Unter einer "zumindest im Wesentlichen gesamte Vertikalerstreckung" soll verstanden werden, dass sich die Vertikalanschlagsfläche über insbesondere zumindest 80 %, vorzugsweise mindestens 90 %, vorteilhaft zumindest 95 % und besonders bevorzugt mindestens 98 % des Staubschutzverschlusselements und insbesondere der Vertikalerstreckung des Innenbereichs des Grundgehäuses erstreckt. Vorzugsweise ist die Vertikalanschlagsfläche dazu vorgesehen, eine Gegenkraft für die elastische Vorspannung des Staubschutzverschlusselements in der Verschlussposition bereitzustellen. Besonders bevorzugt bildet die Vertikalaußenwandung des Grundgehäuses zumindest teilweise die Vertikalanschlagsfläche. Insbesondere bildet zumindest die Vertikalanschlagsfläche die Unterbrechung der Vertikalführungsfläche.

Weiterhin wird vorgeschlagen, dass das Grundgehäuse zumindest eine Horizontalanschlagsfläche für einen Horizontal-Endbereich des Staubschutzverschlusselements in der Verschlussposition ausbildet. Dadurch kann vorteilhaft ein staubdichtes Verschließen des Staubschutzverschlusselements weiter optimiert werden. Besonders bevorzugt ist die Horizontalanschlagsfläche mit dem Horizontal-Endbereich dazu vorgesehen, den Innenbereich zumindest im Hinblick auf die Horizontalaußenwandung des Grundgehäuses, insbesondere in Bezug auf das Eindringen von Staub, zu verschließen. Insbesondere ist der Horizontal-Endbereich des Staubschutzverschlusselements ein Seitenbereich des Staubschutzverschlusselements, der verschieden ist von dem das freie Ende des Staubschutzverschlusselements aufweisenden Endbereich. Vorzugsweise weist zumindest eine der Horizontalaußenwandungen des Grundgehäuses die Horizontalanschlagsfläche auf. Besonders bevorzugt weisen beide Horizontalaußenwandungen des Grundgehäuses jeweils eine Horizontanschlagsfläche auf. Besonders bevorzugt erstreckt sich zumindest eine Horizontalanschlagsfläche zumindest im Wesentlichen über eine gesamte Horizontalerstreckung des Staubschutzverschlusselements, wobei sich die Horizontalanschlagsfläche über insbesondere zumindest 80 %, vorzugsweise mindestens 90 %, vorteilhaft zumindest 95 % und besonders bevorzugt mindestens 98 % des Staubschutzverschlusselements und insbesondere der Horizontalerstreckung des Innenbereichs des Grundgehäuses erstreckt.

Zudem wird vorgeschlagen, dass die Vertikalanschlagsfläche gemeinsam mit Horizontalanschlagsflächen zu einer Erzeugung einer zumindest zu einem Großteil umlaufenden Abdichtung in der Verschlussposition des Staubschutzverschlusselements vorgesehen ist. Dadurch kann vorteilhaft ein Eindringen von Fremdkörpern in den Innenbereich des Grundgehäuses von allen Seiten zumindest im Wesentlichen verhindert werden. Unter einer "zu einem Großteil umlaufenden Abdichtung" soll insbesondere verstanden werden, dass insbesondere zumindest 70 %, vorzugsweise mindestens 80 %, vorteilhaft 90 % und besonders bevorzugt mindestens 95 % des Innenbereichs in der Verschlussposition des Staubschutzverschlusselements durch die Horizontalanschlagsflächen und die Vertikalanschlagsfläche abgedichtet ist, beziehungsweise die Horizontalanschlagsflächen und die Vertikalanschlagsfläche mit dem Endbereich des Staubschutzverschlusselements in einem direkten Kontakt ist. Vorzugsweise ist die Steckerverbindungsöffnung auf Seite der Trennwand durch das Befestigungselement der Schutzeinheit, insbesondere durch das Umbiegen des Befestigungsbereichs um den Endbereich der Trennwand, abgedichtet.

Darüber hinaus wird vorgeschlagen, dass das Grundgehäuse zumindest eine Ausnehmung oder Vertiefung ausbildet, welche die zumindest eine Horizontalanschlagsfläche und/oder die Vertikalanschlagsfläche erzeugt. Dadurch kann vorteilhaft eine möglichst platzsparende Abdichtung innerhalb des Grundgehäuses bereitgestellt werden. Ferner kann vorteilhaft eine Stabilität bei dem Einführen des Steckers verbessert werden. Vorzugsweise ist die Vertikalanschlagsfläche als Vertiefung, insbesondere in der Vertikalaußenwandung des Grundgehäuses, ausgebildet. Vorzugsweise bildet die Vertiefung, die die Vertikalanschlagsfläche bildet, die Unterbrechung der Vertikalführungsfläche. Vorzugsweise ist zumindest die Horizontalanschlagsfläche als Vertiefung, insbesondere in der Horizontalaußenwandung des Grundgehäuses, vorzugsweise auf Seite des Grundgehäuses, welches die Rastaufnahme bildet, ausgebildet. Besonders bevorzugt erstreckt sich die Vertiefung für die Horizontalanschlagsfläche über den gesamten Schwenkbereich des Staubschutzverschlusselements, insbesondere sodass der Horizontal-Endbereich des Staubschutzverschlusselements über den gesamten Schwenkbereich von der Verschlussposition zu der Öffnungsposition in der Vertiefung angeordnet ist. Vorzugsweise ist die Vertiefung für die Horizontalanschlagsfläche zumindest näherungsweise gemäß einer halben Gingkoblatt-Form, wobei vorzugsweise die Vertiefung der Horizontalanschlagsfläche des Staubschutzverschlusselements und eine weitere Vertiefung einer weiteren Horizontalanschlagsfläche des weiteren Staubschutzverschlusselements gemeinsam zumindest näherungsweise gingkoblatt-förmig ausgestaltet sind. Vorzugsweise ist zumindest die weitere Horizontalanschlagsfläche als die Ausnehmung, insbesondere in der Horizontalaußenwandung des Grundgehäuses, vorzugsweise auf einer der Seite der Rastaufnahme gegenüberliegenden Seite, ausgebildet. Besonders bevorzugt weist das Staubschutzverschlusselement ein Anschlagsteil zu einem Anschlag mit der durch die Ausnehmung gebildeten Horizontalanschlagsfläche auf, wobei der Anschlagsteil insbesondere ausgehend von einer horizontalen Kante des Staubschutzverschlusselements innerhalb des Grundgehäuses als Auswölbung ausgebildet ist, die sich insbesondere über den Innenbereich des Grundgehäuses hinaus erstreckt. Vorzugsweise ist der Anschlagsteil des Staubschutzverschlusselements über den gesamten Schwenkbereich des Staubschutzverschlusselements von der Verschlussposition bis zur Öffnungsposition in der Ausnehmung angeordnet. Vorzugsweise weist der faseroptische Adapter einen aufclippbaren Rahmen auf, der zumindest dazu vorgesehen ist, die Ausnehmung des Grundgehäuses zu verschließen.

Zudem wird vorgeschlagen, dass das Staubschutzverschlusselement zumindest einen Gleitschuh aufweist. Dadurch kann vorteilhaft ein Verschleiß und damit eine Lebensdauer des Grundgehäuses optimiert werden. Ferner kann vorteilhaft eine Gleitfähigkeit des Staubschutzverschlusselements, insbesondere in der Vertiefung, optimiert werden, sodass die Einsteckkraft beim Einstecken des Steckers weiter minimiert werden kann. Vorzugsweise ist der Gleitschuh zu einer reibungsarmen Interaktion zwischen dem als Blechbiegeteil ausgebildeten Staubschutzverschlusselement und der Horizontalaußenwandung des Innenbereichs des Grundgehäuses. Besonders bevorzugt ist der Gleitschuh aus dem Blechbiegeteil des Staubschutzverschlusselements geformt. Insbesondere ist der Gleitschuh an einem Horizontal-Endbereich des Staubschutzverschlusselements angeordnet, insbesondere in Richtung des Innenbereichs, gegenüberliegend von der Horizontalanschlagsfläche. Besonders bevorzugt ist der Gleitschuh einstückig mit dem Staubschutzverschlusselement ausgebildet. Vorzugsweise ist der Gleitschuh in einem Vertikal-Endbereich des Staubschutzverschlusselements angeordnet. Besonders bevorzugt ist der Gleitschuh zu einem Gleiten in der Vertiefung der Horizontalanschlagsfläche vorgesehen. Vorzugsweise ist der Gleitschuh ein nach innen abgewinkeltes Blechteil des Staubschutzverschlusselements, wobei eine von einer Kante verschiedene Fläche des Gleitschuhs zu dem Gleiten vorgesehen ist. Vorzugsweise weist das Staubschutzverschlusselement zumindest einen weiteren Gleitschuh auf, welcher zu einem Gleiten auf der weiteren Horizontalaußenwandung des Grundgehäuses vorgesehen ist.

In einer weiteren Ausgestaltung der Erfindung wird vorgeschlagen, dass das Staubschutzverschlusselement zumindest zwei Staubschutzverschlussteile aufweist, welche sich vorzugsweise jeweils zumindest im Wesentlichen vollständig über eine der Steckerverbindungsöffnungen, insbesondere vollständig über eine Vertikale und eine Horizontale der Steckerverbindungsöffnung, erstrecken. Dadurch kann vorteilhaft ein Anschlagsdruck des Staubschutzverschlusselements gegen die Vertikalaußenwandung und vorteilhaft eine Staubdichtigkeit weiter erhöht werden. Weiterhin kann vorteilhaft aufgrund des erhöhten Anschlagsdrucks auf eine als Vertiefung in der Vertikalaußenwandung ausgebildete Anschlagsfläche verzichtet werden oder eine Kombination dieses Staubschutzverschlusselements mit der als Vertiefung ausgebildeten Anschlagsfläche eine Staubdichtigkeit noch weiter erhöht werden. Insbesondere ist das Staubschutzverschlusselement mit den zwei Staubschutzverschlussteilen zumindest abschnittsweise, vorzugsweise vollständig, doppelwandig ausgeführt. Besonders bevorzugt ist der eingangsseitige Staubschutzverschlussteil und/oder der innenseitige Staubschutzverschlussteil zumindest im Wesentlichen, insbesondere zumindest zu 50 %, vorzugsweise mindestens zu 75 %, vorteilhaft zumindest zu 90 %, besonders bevorzugt mindestens zu 95 % und besonders vorteilhaft vollständig, bogenförmig ausgebildet, vorzugsweise mit einem zumindest im Wesentlichen konstanten Krümmungsradius. Vorzugsweise weist das Staubschutzverschlusselement eine U-Biegung auf, welche insbesondere die zwei Staubschutzverschlusselemente, insbesondere über eine kontinuierliche Materialverbindung, verbindet und insbesondere dazu vorgesehen ist, einen Anschlag mit der Vertikalaußenwandung bereitzustellen. Besonders bevorzugt sind die zwei Staubschutzverschlussteile von der U-Biegung ausgehend, insbesondere über die Steckerverbindungsöffnung erstreckend, divergierend ausgebildet, wobei das Staubschutzverschlusselement zwischen den Staubschutzverschlussteilen einen Winkel von maximal 90°, vorzugsweise höchstens 60°, vorteilhaft maximal 45°, besonders bevorzugt höchstens 30° und besonders vorteilhaft maximal 15° aufweist. Vorzugsweise ist der eingangsseitige Staubschutzverschlussteil mit dem Befestigungselement der Schutzeinheit verbunden. Vorzugsweise weist der innenseitige Staubschutzverschlussteil ein Gleitteil auf, welches gleitend an der Trennwand anliegt und vorzugsweise bei einem Öffnen des Staubschutzverschlusselements an der Trennwand führbar ausgebildet ist.

Besonders bevorzugt ist der innenseitige Staubschutzverschlussteil, insbesondere zur Bereitstellung eines Anschlagsdrucks bei dem Anschlag des Staubschutzverschlusselements, insbesondere der U-Biegen, gegen die Vertikalaußenwandung, zwischen der Trennwand und der Vertikalaußenwandung, vorzugsweise mittels der Bogenform, vorgespannt. Besonders bevorzugt weist die Trennwand des Grundgehäuses eine Führungsfläche auf, entlang welcher der Gleitteil des Staubschutzverschlusselements entlanggleitet. Besonders bevorzugt ist die Trennwand, insbesondere in einem Bereich der Führungsfläche zumindest teilweise konvex, insbesondere verjüngend, ausgebildet. Vorzugsweise ist der Teil der Steckerverbindungsöffnung zwischen dem innenseitigen Staubschutzverschlussteil und dem Steckeranschlag abschüssig ausgebildet, insbesondere damit das Staubschutzverschlusselement bei einer Betätigung frei läuft, insbesondere nicht hängen bleibt.

Ferner geht die Erfindung aus von der Schutzeinheit für einen faseroptischen Adapter. Dadurch kann vorteilhaft eine Schutzeinheit für einen faseroptischen Adapter mit einer erhöhten Zuverlässigkeit bereitgestellt werden, da vorteilhaft bei einer Abwesenheit eines Steckers in der Steckerverbindungsöffnung, die für die Kopplung des optischen Steckers vorgesehen ist, eine Ansammlung von Staub und/oder weiteren Fremdkörpern verhindert werden kann. Zudem kann vorteilhaft eine Bedienerfreundlichkeit erhöht werden, insbesondere aufgrund der Federelastizität eines Teils der Schutzeinheit, insbesondere des Staubschutzverschlusselements und/oder Laserschutzelements, die eine Selbstrückstellung bereitstellt, sodass ein Bediener ohne eigenes Zutun die Steckerverbindungsöffnung staubdicht verschließt. Ferner kann vorteilhaft eine Schutzeinheit bereitgestellt werden, die möglichst flexibel austauschbar und wartbar ausgestaltet ist. Vorzugsweise ist die Schutzeinheit das monolithische Bauteil, insbesondere Blechbiegeteil, welches, insbesondere einstückig, das Staubschutzverschlusselement und vorzugsweise das Laserschutzelement aufweist. Vorzugsweise ist die Schutzeinheit für einen faseroptischen Adapter vorgesehen, wobei die Schutzeinheit in das Grundgehäuse des faseroptischen Adapters montierbar ausgestaltet ist. Insbesondere weist die Schutzeinheit das Befestigungselement auf, welches zu der Kopplung mit einem Gegenstück eines Grundgehäuses eines faseroptischen Adapters vorgesehen ist. Weiterhin weist die Schutzeinheit vorzugsweise das Horizontalführungselement der Führungseinheit auf.

Darüber hinaus geht die Erfindung aus von einem Verfahren zur Herstellung des faseroptischen Adapters. Erfindungsgemäß wird der faseroptische Adapter einseitig montiert. Dadurch kann vorteilhaft ein faseroptischer Adapter mit einer erhöhten Zuverlässigkeit hergestellt werden, da vorteilhaft bei einer Abwesenheit eines Steckers in der Steckerverbindungsöffnung, die für die Kopplung des optischen Steckers vorgesehen ist, eine Ansammlung von Staub und/oder weiteren Fremdkörpern verhindert werden kann. Ferner kann vorteilhaft der Montageprozess und/oder die Wartung des faseroptischen Adapters vereinfacht und das Risiko für Montagefehler verringert werden, da lediglich der Zugang von einer Seite erforderlich ist. Vorzugsweise werden sämtliche Einzelteile des faseroptischen Adapters einseitig vertikal, insbesondere zu der Einsteckachse, montiert, insbesondere in einen Grundkörper des Grundgehäuses eingeführt. Vorzugsweise weist der faseroptische Adapter eine Montageöffnung auf, die insbesondere durch ein Entfernen des Deckels des Grundgehäuses bereitgestellt, wobei der Deckel insbesondere eine der Horizontalaußenwandungen bildet. Vorzugsweise wird in zumindest einem ersten Verfahrensschritt das Staubschutzverschlusselement in das Grundgehäuse eingeführt. In zumindest einem weiteren Verfahrensschritt wird ein Deckel des Grundgehäuses zum Schließen des Grundgehäuses auf den Grundkörper des Grundgehäuses montiert. In zumindest einem weiteren Verfahrensschritt wird der aufclippbare Rahmen auf das Grundgehäuse, insbesondere über den Deckel, geführt.

Zudem wird ein System mit zumindest zwei faseroptischen Adaptern, vorzugsweise zumindest dem faseroptischen Adapter mit dem Staubschutzverschlusselement, insbesondere der Schutzeinheit, und mit einer Kopplungseinheit, welche dazu vorgesehen ist, die zumindest zwei faseroptischen Adapter miteinander zu verbinden, vorgeschlagen. Insbesondere bildet ein aufclippbarer Rahmen zumindest teilweise die Kopplungseinheit. Vorzugsweise weist der aufclippbare Rahmen zumindest zwei Aufnahmen für ein Fixieren der zumindest zwei faseroptischen Adapter auf. Insbesondere umgreift der aufclippbare Rahmen zusammen die zumindest zwei faseroptischen Adapter, wobei der aufclippbare Rahmen, insbesondere das Grundgehäuse der faseroptischen Adapter, die faseroptischen Adapter vollständig umgreift, vorzugsweise sodass zwei Seitenflächen des aufclippbaren Rahmens, welche insbesondere jeweils mit einem der faseroptischen Adapter in Kontakt sind, parallel zueinander sind. Besonders bevorzugt weist die Kopplungseinheit ein Kopplungselement auf, welches die zumindest zwei faseroptischen Adapter, insbesondere mit einem Formschluss, miteinander verbindet. Vorzugsweise weisen die zumindest zwei faseroptischen Adapter zumindest eine Ausnehmung für einen formschlüssigen Eingriff des Kopplungselements auf. Insbesondere erstreckt sich das Kopplungselement von einem faseroptischen Adapter zu dem zumindest einem weiteren faseroptischen Adapter. Insbesondere ist das Kopplungselement zumindest im Wesentlichen stabförmig, insbesondere zumindest näherungsweise knochenförmig ausgebildet, wobei das Kopplungselement sich längs erstreckende Seitenkanten aufweist, die zumindest abschnittsweise zumindest im Wesentlichen parallel sind. Besonders bevorzugt weist das Kopplungselement zumindest eine Querstrebe auf, welche insbesondere senkrecht zu einer Längsachse des Kopplungselements, insbesondere senkrecht zu den zumindest im Wesentlichen parallelen Seitenkanten, ausgebildet ist. Insbesondere weist das Kopplungselement für jeden faseroptischen Adapter zumindest, vorzugsweise lediglich, eine Querstrebe auf.

Ist der faseroptische Adapter hergestellt, wird vorzugsweise bei einem Einsteckvorgang der Stecker in die Steckerverbindungsöffnung geführt. Bei dem Einsteckvorgang wird vorzugsweise das Staubschutzverschlusselement aufgebogen, insbesondere bis es zumindest näherungsweise linear an der Trennwand des Grundgehäuses anliegt. Bei dem Einsteckvorgang wird vorzugsweise das Staubschutzverschlusselement, insbesondere das Horizontalführungselement, über die Führungselemente des Grundgehäuses gestreckt und eine horizontale Führung bereitgestellt. Bei dem Einsteckvorgang wird vorzugsweise der Vertikal-Endbereich des Staubschutzverschlusselements aus der Vertiefung, die die Vertikalanschlagsfläche bildet, geführt. Bei dem Einsteckvorgang wird vorzugsweise der Horizontal-Endbereich des Staubschutzverschlusselements in der Vertiefung der Horizontalanschlagsfläche geführt.

Der erfindungsgemäße faseroptische Adapter, die erfindungsgemäße Schutzeinheit und das erfindungsgemäße Verfahren sollen hierbei nicht auf die oben beschriebene Anwendung und Ausführungsform beschränkt sein. Insbesondere kann der erfindungsgemäße faseroptische Adapter, die erfindungsgemäße Schutzeinheit und das erfindungsgemäße Verfahren zu einer Erfüllung einer hierin beschriebenen Funktionsweise eine von einer hierin genannten Anzahl von einzelnen Elementen, Bauteilen, Einheiten und Verfahrensschritten abweichende Anzahl aufweisen.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine Explosionsdarstellung eines faseroptischen Adapters, mit einem Grundgehäuse und zumindest einer Schutzeinheit,
- Fig. 2: eine Draufsicht auf den von oben geöffnetem faseroptischem Adapter, mit dem Grundgehäuse, der Schutzeinheit und einem Stecker, der teilweise in eine Steckerverbindungsöffnung des Grundgehäuses eingeführt ist,
- Fig. 3: eine Schnittansicht eines Grundkörpers des Grundgehäuses,
- Fig. 4: eine Schnittansicht des faseroptischen Adapters und des Steckers, wobei der Stecker vollständig in der Steckerverbindungsöffnung angeordnet ist,
- Fig. 5: die Schutzeinheit, zumindest mit einem Staubschutzverschlusselement, einem Laserschutzelement und einem Befestigungselement,
- Fig. 6: eine Explosionsdarstellung eines alternativen faseroptischen Adapters, mit einem Grundgehäuse und zumindest einer Schutzeinheit, wobei der faseroptische Adapter einseitig montierbar ausgestaltet ist,
- Fig. 7: eine Draufsicht auf den alternativen von oben geöffnetem faseroptischem Adapter, mit dem Grundgehäuse und mit der darin montierten Schutzeinheit,
- Fig. 8: eine schematische Darstellung eines Verfahrens zur Montage des faseroptischen Adapters,
- Fig. 9: eine Explosionsdarstellung eines weiteren alternativen faseroptischen Adapters, mit einem Grundgehäuse und zumindest einer Schutzeinheit, wobei das Grundgehäuse Ausnehmungen für zumindest ein Teil der Schutzeinheit aufweist,
- Fig. 10: eine Schnittansicht des weiteren alternativen faseroptischen Adapters, mit dem Grundgehäuse und der darin montierten Schutzeinheit,

- Fig. 11: eine Schnittansicht eines weiteren alternativen faseroptischen Adapters, mit einem Teil eines Grundgehäuses und einer Schutzeinheit, wobei die Schutzeinheit zumindest einen Gleitschuh aufweist,
- Fig. 12: eine axonometrische Ansicht eines weiteren alternativen faseroptischen Adapters, der von oben geöffnet ist, mit einem Grundgehäuse und mit einer Schutzeinheit, wobei die Schutzeinheit ein zumindest im Wesentlichen doppelwandiges Staubschutzverschlusselement aufweist,
- Fig. 13: eine geschnittene Draufsicht auf den weiteren alternativen faseroptischen Adapter mit der Schutzeinheit und
- Fig. 14: ein System mit mehreren faseroptischen Adaptern und einer Kopplungseinheit.

### Beschreibung der Ausführungsbeispiele

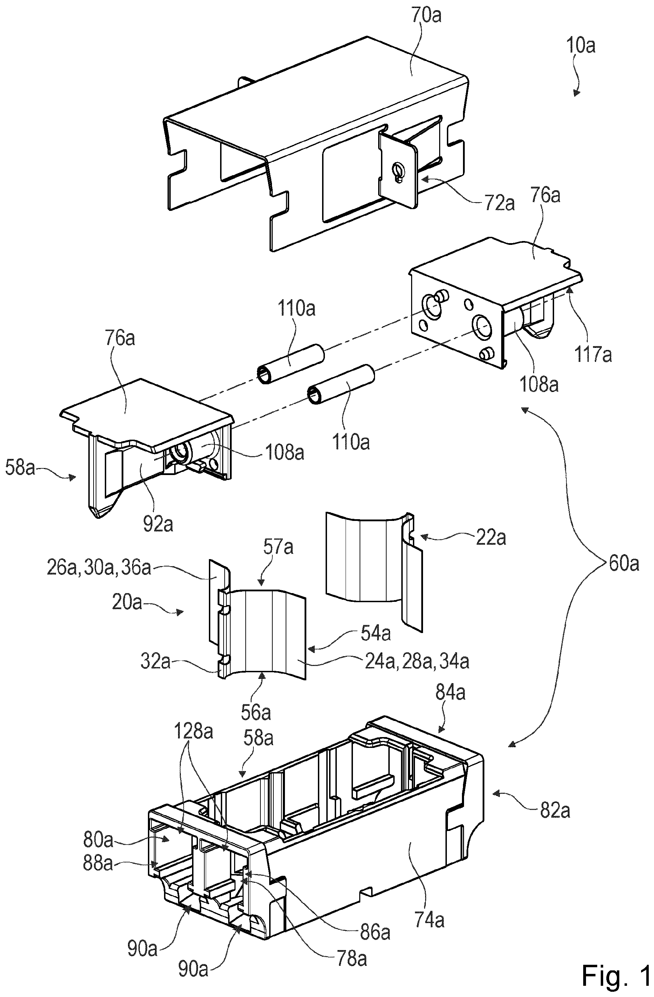

Fig. 1 zeigt eine Explosionsdarstellung eines faseroptischen Adapters 10a. Der faseroptische Adapter 10a weist zumindest ein Grundgehäuse 60a auf. Das Grundgehäuse 60a weist zumindest eine Steckerverbindungsöffnung 78a zum Einführen eines Steckers 12a in das Grundgehäuse 60a auf. Der faseroptische Adapter 10a weist zumindest zwei aufeinander ausgerichteten Steckerverbindungsöffnungen 78a, 82a auf.

In die Steckerverbindungsöffnung 78a und die gegenüberliegende Steckerverbindungsöffnung 82a ist jeweils ein Stecker 12a vom Typ "LC" einführbar. Die gegenüberliegenden Steckerverbindungsöffnungen 78a, 82a sind derart ausgestaltet, dass in den Steckern 12a geführte Lichtwellenleiter 182a in einem mit dem faseroptischen Adapter 10a vollständig verbundenen Zustand miteinander in Kommunikationsverbindung stehen. Das Grundgehäuse 60a weist zumindest eine weitere Steckerverbindungsöffnung 80a auf. Das Grundgehäuse 60a weist zumindest eine der weiteren Steckerverbindungsöffnung 80a gegenüberliegende Steckerverbindungsöffnung 84a auf.

Die weitere Steckerverbindungsöffnung 80a ist identisch zu der Steckerverbindungsöffnung 78a. Das Grundgehäuse 60a ist bei der weiteren Steckerverbindungsöffnung 80a identisch ausgebildet wie bei der Steckerverbindungsöffnung 78a. Die Steckerverbindungsöffnungen 78a, 80a sind auf einer Seite des Grundgehäuses 60a nebeneinander angeordnet. Das Grundgehäuse 60a weist zwischen der Steckerverbindungsöffnung 78a und der weiteren Steckerverbindungsöffnung 80a eine Trennwand 114a auf. Der faseroptische Adapter 10a ist als ein Duplex-Adapter 10a ausgebildet. Die Steckerverbindungsöffnungen 78a, 80a, 82a, 84a sind zur Aufnahme von genormten Duplex-Steckern 12a vom Typ "LC" vorgesehen. Der faseroptische Adapter 10a ist zu einer Aufnahme von zweien aufeinander ausgerichteten Duplex-Steckern 12a vorgesehen. Die Steckerverbindungsöffnung 78a und die weitere Steckerverbindungsöffnung 80a definieren jeweils einen Aufnahmeraum für den Stecker 12a von einem Steckereingang 86a und einem weiteren Steckereingang 88a bis zu einem Steckeranschlag 120a.

Das Grundgehäuse 60a weist einen Grundkörper 74a auf. Der Grundkörper 74a weist zu einer Montage des faseroptischen Adapters 10a eine zu den Steckerverbindungsöffnung 78a verschiedene Montageöffnung auf. Das Grundgehäuse 60a weist zumindest einen Deckel 76a auf. Der Deckel 76a ist zu einem Verschließen des Grundgehäuses 60a vorgesehen. Der Deckel 76a weist zumindest eine Leiterführung 108a auf. Die Leiterführung 108a ist zu einer Aufnahme zumindest einer Leiterführungshülse 110a vorgesehen, welche zu einer Aufnahme einer Ferrule 184a des Steckers 12a vorgesehen ist. Das Grundgehäuse 60a weist zumindest eine Rastaufnahme 90a zu einer Aufnahme eines Rastelements 186a des Steckers 12a auf. Die Rastaufnahme 90a ist zu einer Rastverbindung mit dem Rastelement 184a des Steckers 12a in einem verbundenen Zustand des Steckers 12a mit dem faseroptischen Adapter 10a vorgesehen. Der faseroptische Adapter 10a weist zumindest einen aufclippbaren Rahmen 70a auf. Der aufclippbare Rahmen 70a ist zu einer Aufnahme des Grundgehäuses 60a vorgesehen. Der aufclippbare Rahmen 70a weist zumindest einen Clip 72a auf, der zumindest dazu vorgesehen ist, mit einem Rangierfeld und/oder einem Patchpanel eine Clip- und/oder Schraubverbindung einzugehen.

Der faseroptische Adapter 10a weist eine an dem Grundgehäuse 60a angeordnete Schutzeinheit 20a auf. Die Schutzeinheit 20a weist zumindest ein Befestigungselement 32a auf. Das Befestigungselement 32a ist zu einer Befestigung der Schutzeinheit 20a in dem Grundgehäuse 60a vorgesehen. Das Befestigungselement 32a ist zu einer Befestigung der Schutzeinheit 20a an dem Grundkörper 72a des Grundgehäuses 60a vorgesehen. Die Schutzeinheit 20a ist zusätzlich zu einer Befestigung mit weiteren faseroptischen Adaptern geeignet. Die Schutzeinheit 20a weist zumindest ein Staubschutzverschlusselement 24a zu einem staubdichten Verschließen der Steckerverbindungsöffnung 78a auf. Die zumindest eine weitere Steckerverbindungsöffnung 80a ist mit einem weiteren Staubschutzverschlusselement 26a der Schutzeinheit 20a staubdicht verschließbar. Der faseroptische Adapter 10a weist eine weitere an dem Grundgehäuse 60a angeordnete Schutzeinheit 22a auf. Die weitere Schutzeinheit 22a weist weitere Staubschutzverschlusselemente auf, welche die zu der Steckerverbindungsöffnung 78a und weiteren Steckerverbindungsöffnung 80a gegenüberliegenden Steckerverbindungsöffnungen 82a, 84a staubdicht verschließen.

Die Schutzeinheit 20a ist zumindest zu einem Großteil federelastisch. Das Staubschutzverschlusselement 24a ist federelastisch. Das weitere Staubschutzverschlusselement 24a ist federelastisch. Das Staubschutzverschlusselement 24a ist in eine Verschlussposition des Staubschutzverschlusselements 24a an der Steckerverbindungsöffnung 78a selbstrückstellend ausgebildet. Das weitere Staubschutzverschlusselement 24a ist in eine Verschlussposition des Staubschutzverschlusselements 24a selbstrückstellend ausgebildet. Die Schwenkachse des Staubschutzverschlusselements 24a ist auf der Seite der Steckerverbindungsöffnung 78a, die die Trennwand 114a bildet. Die Schwenkachse ist zumindest näherungsweise in einer durch die Trennwand 114a gebildeten Haupterstreckungsebene. Das weitere Staubschutzverschlusselement 26a ist identisch zu dem Staubschutzverschlusselement 24a. Das weitere Staubschutzverschlusselement 24a bildet sämtliche Elemente des Staubschutzverschlusselements 24a aus. Die weitere Steckerverbindungsöffnung 80a und/oder das weitere Staubschutzverschlusselement 26a sind zu der Steckerverbindungsöffnung 78a und/oder dem Staubschutzverschlusselement 24a spiegelsymmetrisch in Bezug auf eine durch die Haupterstreckungsebene der Trennwand 114a gebildeten Spiegelebene ausgebildet.

Die Schutzeinheit 20a ist als ein monolithisches Bauteil ausgebildet. Die Schutzeinheit 20a ist als Blechbiegeteil ausgebildet. Die Schutzeinheit 20a weist eine kontinuierliche Struktur auf, die frei von Zusammenfügungen oder Verbindungen separater Komponenten geformt ist. Die Schutzeinheit 20a besteht aus einem monolithischen Blechbiegeteil. Das Blechbiegeteil bildet das Befestigungselement 32a. Das Blechbiegeteil bildet das Staubschutzverschlusselement 24a. Das Blechbiegeteil bildet das weitere Staubschutzverschlusselement 26a. Die Federelastizität des Staubschutzverschlusselements 24a und des weiteren Staubschutzverschlusselements 26a ist durch die Materialeigenschaften des monolithischen Blechbiegeteils bereitgestellt. Das Staubschutzverschlusselement 24a ist dazu vorgesehen, durch das Verbiegen des Blechbiegeteils ein Einführen des Steckers 12a zu ermöglichen.

Die Schutzeinheit 20a bildet als monolithisches Bauteil das Staubschutzverschlusselement 24a und das weitere Staubschutzverschlusselement 26a. Die Schutzeinheit 20a ist zumindest näherungsweise V-förmig ausgebildet. Das Staubschutzverschlusselement 24a und das weitere Staubschutzverschlusselement 24a bilden jeweils einen Arm der V-Form. Das Staubschutzverschlusselement 24a und das weitere Staubschutzverschlusselement 24a ragen konvex gegeneinander ausgehend von der Trennwand 114a über die Steckerverbindungsöffnung 78a. Das Staubschutzverschlusselement 24a geht in das Befestigungselement 32a über, welches um eine proximale Endkante der Trennwand 114a umgelegt ist. Die Trennwand 114a ist dazu vorgesehen, auf das Staubschutzverschlusselement 24a einwirkende Kräfte aufzunehmen.

Die Schutzeinheit 20a weist zumindest ein Laserschutzelement 28a auf. Das Laserschutzelement 28a ist federelastisch und in einer Verschlussposition des Laserschutzelements 28a an der Steckverbindungsöffnung selbstrückstellend ausgebildet. Das Laserschutzelement 28a ist dazu vorgesehen, ein Austreten von Lichtstrahlen aus dem Innenraum des Grundgehäuses 60a zu verhindern. Das Laserschutzelement 28a blockiert die Lichtstrahlen von dem weiteren Stecker 12a in den gegenüberliegenden Steckerverbindungsöffnungen 82a, 84a, der mit dem faseroptischen Adapter 10a verbunden ist. Das Laserschutzelement 28a ist aus einem intransparenten Material, welches zur Bereitstellung von Laserschutzeigenschaften Licht innerhalb des Grundgehäuses 60a reflektiert und/oder absorbiert.

Das Laserschutzelement 28a ist einstückig mit dem Staubschutzverschlusselement 24a ausgebildet. Das Laserschutzelement 28a ist in einem Stück mit dem Staubschutzverschlusselement 24a geformt. Das Laserschutzelement 28a ist bauteilgleich mit dem Staubschutzverschlusselement 24a. Das Staubschutzverschlusselement 24a und das Laserschutzelement 28a unterscheiden sich lediglich in deren Funktion. Das Blechbiegeteil bildet das Laserschutzelement 28a. Die Federelastizität des Laserschutzelements 28a ist durch die Materialeigenschaften des monolithischen Blechbiegeteils bereitgestellt. Das Laserschutzelement 28a ist dazu vorgesehen, durch das Verbiegen des Blechbiegeteils ein Einführen des Steckers 12a zu ermöglichen. Die Schutzeinheit 20a bildet als monolithische Bauteil das Laserschutzelement 28a und ein weiteres Laserschutzelement 30a. Das weitere Laserschutzelement 30a ist einstückig mit dem weiteren Staubschutzverschlusselement 24a ausgebildet.

Die weitere Steckerverbindungsöffnung 80a und das weitere Staubschutzverschlusselement 26a sind vollständig spiegelsymmetrisch zu der Steckerverbindungsöffnung 78a und dem Staubschutzverschlusselement 24a ausgebildet. Entsprechend wird fortfolgend auf eine weitere Beschreibung der weiteren Steckerverbindungsöffnung 80a und des weiteren Staubschutzverschlusselements 24a verzichtet, wobei jegliche Ausführung der Steckerverbindungsöffnung 78a und des Staubschutzverschlusselements 24a in gleichem Maße auch auf die weitere Steckerverbindungsöffnung 80a und das weitere Staubschutzverschlusselement 26a übertragbar ist. In gleichem Maße ist auch die zu der Steckerverbindungsöffnung 78a und der weiteren Steckerverbindungsöffnung 80a als auch zu der Schutzeinheit 20a gegenüberliegende Steckerverbindungsöffnung 82a und gegenüberliegende weitere Steckerverbindungsöffnung 84a als auch die weitere Schutzeinheit 22a vollständig spiegelsymmetrisch ausgebildet. Entsprechend wird fortfolgend auf eine weitere Beschreibung der gegenüberliegenden Steckerverbindungsöffnung 82a und der gegenüberliegenden weiteren Steckerverbindungsöffnung 84a als auch der weiteren Schutzeinheit 22a verzichtet, wobei jegliche Ausführung der Steckerverbindungsöffnung 78a, der weiteren Steckerverbindungsöffnung 80a und der Schutzeinheit 20a auch auf die gegenüberliegende Steckerverbindungsöffnung 82a, die gegenüberliegende weitere Steckerverbindungsöffnung 84a und die weitere Schutzeinheit 22a übertragbar ist.

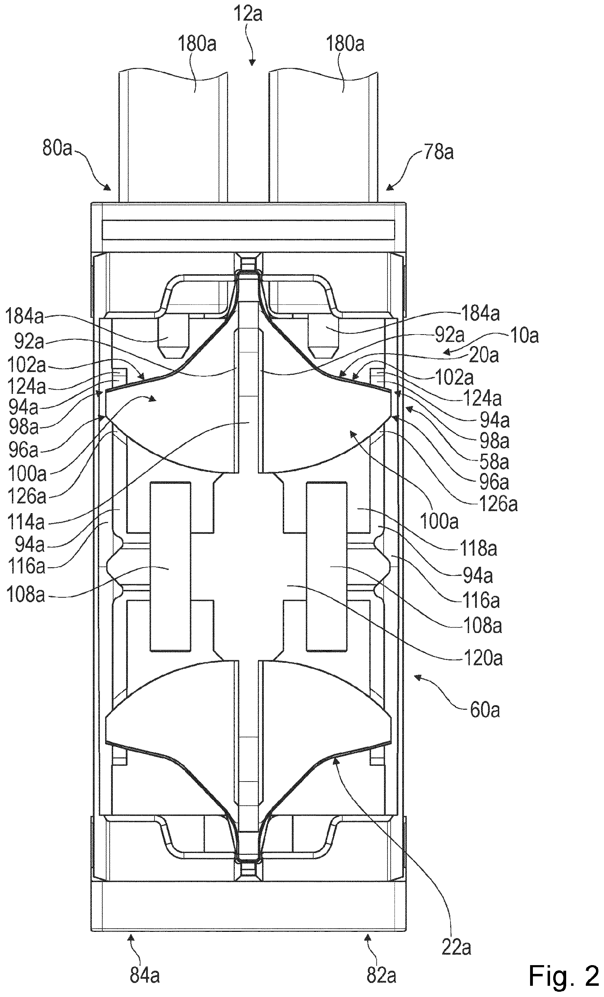

Fig. 2 zeigt eine Draufsicht auf den von oben geöffneten faseroptischen Adapter 10a, mit dem Grundgehäuse 60a, der Schutzeinheit 20a und dem Stecker 12a, wobei der Stecker 12a teilweise in eine der Steckerverbindungsöffnung 78a des Grundgehäuses 60a eingeführt ist. Der faseroptische Adapter 10a weist eine Führungseinheit 58a zur Führung des Steckers 12a bei einem Einführen des Steckers 12a in das Grundgehäuse 60a auf. Die Führungseinheit 58a weist zumindest ein Horizontalführungselement 34a auf. Das Horizontalführungselement 34a ist durch das Staubschutzverschlusselement 24a gebildet. Die Führungseinheit 58a weist zumindest ein weiteres Horizontalführungselement 36a auf, welches durch das weitere Staubschutzverschlusselement 26a gebildet ist. Das Horizontalführungselement 34a und das Staubschutzverschlusselement 24a und/oder das Laserschutzelement 28a sind identisch ausgebildet. Das Horizontalführungselement 34a und das Staubschutzverschlusselement 24a und/oder das Laserschutzelement 28a unterscheiden sich lediglich in deren Funktion. Das Horizontalführungselement 34a ist dazu vorgesehen, bei dem Einführen des Steckers 12a, sich kontinuierlich zu biegen. Das Horizontalführungselement 34a ist dazu vorgesehen, sich entlang einer Grundgehäusewandung entlang zu strecken.

Das Grundgehäuse 60a weist Führungselemente 92a auf. Die Trennwand 114a weist zumindest ein Führungselement 92a für das Horizontalführungselement 34a auf. Das Führungselement 92a ist als eine Ausbuchtung ausgebildet. Das Horizontalführungselement 34a streckt sich bei dem Einführen des Steckers 12a über die Führungselemente 92a. Das Horizontalführungselement 34a ist dazu vorgesehen, ein Verschieben des Steckers 12a senkrecht zu der Einsteckachse in der horizontalen Ebene zu verhindern. Das Horizontalführungselement 34a ist dazu ausgebildet, bei dem Einführen des Steckers 12a sich über das Führungselement 92a zu Biegen und damit eine Führung des Steckers 12a bereitzustellen. Das Horizontalführungselement 34a ist gemeinsam mit dem Führungselement 92a dazu vorgesehen, den Stecker 12a bei dem Einstecken in der horizontalen Ebene einzuspannen.

Das Grundgehäuse 60a weist eine Vertikalführungsfläche 94a auf. Die Führungseinheit 58a weist die Vertikalführungsfläche 94a auf. Die Vertikalführungsfläche 94a weist zumindest eine öffnungsseitig angeordnete Fase 124a, 126a auf. Die Vertikalführungsfläche 94a ist dazu vorgesehen, eine Auflagefläche für den Stecker 12a zu bilden. Die Vertikalführungsfläche 94a bildet eine Auflagefläche für den Stecker 12a entlang des Einsteckwegs des Steckers 12a. Die Vertikalführungsfläche 94a ist zu einer Führung des Steckers 12a auf der Seite des Grundgehäuses 60a vorgesehen, welche die Rastaufnahme 90a für das Rastelement 184a des Steckers 12a ausbildet. Die Vertikalführungsfläche 94a ist verschieden von einer Horizontalaußenwandung 118a des Grundgehäuses 60a ausgebildet. Die Vertikalführungsfläche 94a grenzt eine Vertikalaußenwandung 116a des Grundgehäuses 60a an. Die Vertikalführungsfläche 94a bildet lediglich eine Auflagefläche für einen Kantenbereich des Steckers 12a.

Die Vertikalführungsfläche 94a erstreckt sich zumindest näherungsweise über 75 % eines Einsteckwegs des Grundgehäuses 60a von dem Steckereingang 86a bis zu dem Steckeranschlag 120a. Die Vertikalführungsfläche 94a weist zumindest eine Unterbrechung für den Schwenkbereich des Staubschutzverschlusselements 24a auf. Die Vertikalführungsfläche 94a weist im Anschluss der Unterbrechung eine weitere öffnungsseitig angeordnete Fase 126a auf.

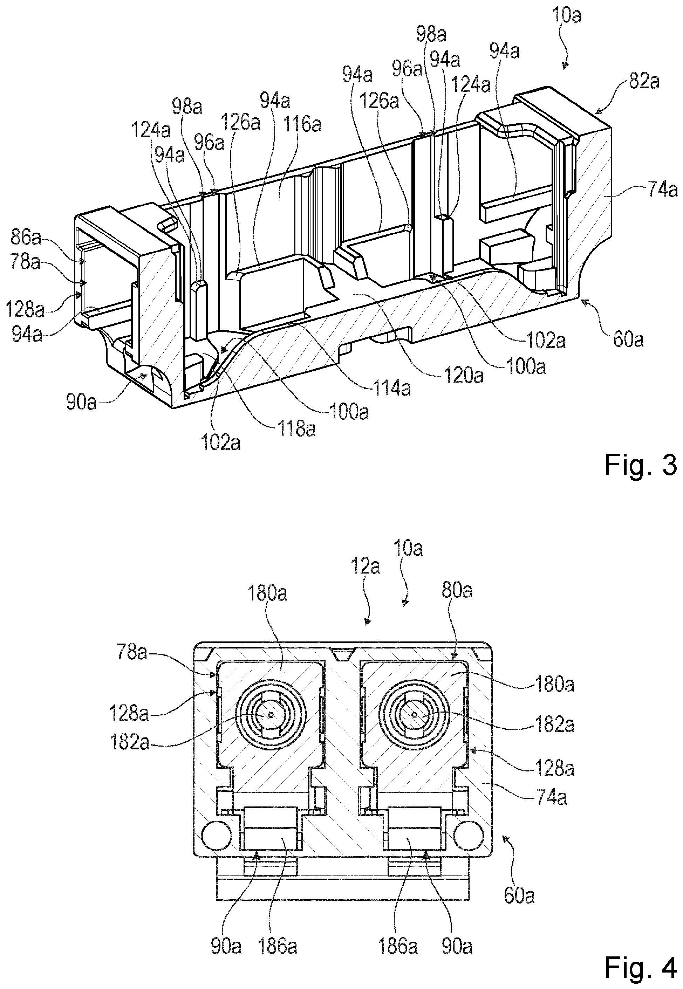

Fig. 3 zeigt eine Schnittansicht des Grundkörpers 74a des Grundgehäuses 60a. Das Grundgehäuse 60a bildet eine Vertikalanschlagsfläche 98a für einen Vertikal-Endbereich 54a des Staubschutzverschlusselements 24a in der Verschlussposition aus. Die Vertikalanschlagsfläche 98a erstreckt sich über eine zumindest im Wesentlichen gesamte Vertikalerstreckung des Staubschutzverschlusselements 24a. Die Vertikalanschlagsfläche 98a ist mit dem Vertikal-Endbereich 54a des Staubschutzverschlusselements 24a dazu vorgesehen, den Innenbereich zumindest im Hinblick auf die Vertikalaußenwandung 116a des Grundgehäuses 60a in Bezug auf ein Eindringen von Staub zu verschließen. Der Vertikal-Endbereich 54a ist ein freies Ende aufweisender Endbereich des Staubschutzverschlusselements 24a. Die Vertikalanschlagsfläche 98a erstreckt sich über 98 % des Staubschutzverschlusselements 24a. Die Vertikalanschlagsfläche 98a erstreckt sich über eine zumindest im Wesentlichen gesamte Vertikalerstreckung des Innenbereichs des Grundgehäuses 60a. Die Vertikalanschlagsfläche 98a erstreckt sich über 98 % der Vertikalerstreckung des Innenbereichs des Grundgehäuses 60a. Die Vertikalanschlagsfläche 98a ist dazu vorgesehen, eine Gegenkraft für die elastische Vorspannung des Staubschutzverschlusselements 24a in der Verschlussposition bereitzustellen. Die Vertikalaußenwandung 116a des Grundgehäuses 60a bildet zumindest teilweise die Vertikalanschlagsfläche 98a. Die Vertikalanschlagsfläche 98a bildet zumindest die Unterbrechung der Vertikalführungsfläche 98a.

Das Grundgehäuse 60a bildet zumindest eine Horizontalanschlagsfläche 102a für einen Horizontal-Endbereich 56a des Staubschutzverschlusselements 24a in der Verschlussposition aus. Die Horizontalanschlagsfläche 102a ist mit dem Horizontal-Endbereich 56a dazu vorgesehen, den Innenbereich zumindest im Hinblick auf die Horizontalaußenwandung 118a des Grundgehäuses 60a in Bezug auf das Eindringen von Staub zu verschließen. Der Horizontal-Endbereich 56a des Staubschutzverschlusselements 24a ist ein Seitenbereich des Staubschutzverschlusselements 24a, der verschieden ist von dem das freie Ende des Staubschutzverschlusselements 24a aufweisenden Endbereich. Zumindest eine der Horizontalaußenwandungen 118a des Grundgehäuses 60a weist die Horizontalanschlagsfläche 102a auf. Die Horizontalaußenwandung 118a auf der Seite der Rastaufnahme 90a des Grundgehäuses 60a weist die Horizontalanschlagsfläche 102a auf. Die Horizontalanschlagsfläche 102a erstreckt sich zumindest im Wesentlichen über eine gesamte Horizontalerstreckung des Staubschutzverschlusselements 24a. Die Horizontalanschlagsfläche 102a erstreckt sich zumindest über 98 % der Horizontalerstreckung des Staubschutzverschlusselements 24a. Die Horizontalanschlagsfläche 102a erstreckt sich zumindest im Wesentlichen über eine gesamte Horizontalerstreckung des Innenbereichs des Grundgehäuses 60a. Die Horizontalanschlagsfläche 102a erstreckt sich zumindest über 98% der Horizontalerstreckung des Innenbereichs des Grundgehäuses 60a.

Die Vertikalanschlagsfläche 98a ist gemeinsam mit Horizontalanschlagsflächen 102a zu einer Erzeugung einer zumindest zu einem Großteil umlaufenden Abdichtung in der Verschlussposition des Staubschutzverschlusselements 24a vorgesehen. Die Steckerverbindungsöffnung 78a ist auf Seite der Trennwand 114a durch das Befestigungselement 32a der Schutzeinheit 20a abgedichtet. Die Steckerverbindungsöffnung 78a ist auf der Seite der Trennwand 114a durch das Umbiegen des Befestigungsbereichs um den Endbereich der Trennwand 114a abgedichtet. Die Steckerverbindungsöffnung 78a ist auf beiden vertikalen Seiten der Steckerverbindungsöffnung 78a und auf zumindest einer horizontalen Seite der Steckerverbindungsöffnung 78a zumindest durch die Überlappung oder das Umbiegen staubdicht abgedichtet. Eine Kante eines weiteren Horizontal-Endbereichs 57a des Staubschutzverschlusselements 24a, der gegenüberliegend von dem Horizontalbereich angeordnet ist, ist anliegend an einer weiteren Horizontalaußenwand 117a, die gegenüberliegend von der Horizontalaußenwand 118a des Grundgehäuses 60a angeordnet ist, angeordnet. Die Kante des weiteren Horizontal-Endbereichs 57a gleitet bei der Schwenkbewegung an der weiteren Horizontalaußenwand 117a des Grundgehäuses 60a.

Das Staubschutzverschlusselement 24a ist in der Verschlussposition elastisch vorgespannt. Das Laserschutzelement 28a ist in der Verschlussposition elastisch vorgespannt. Das Staubschutzverschlusselement 24a übt in der Verschlussposition kontinuierlich Kraft auf eine der Anschlagsflächen 98a, 102a des Grundgehäuses 60a aus. Das Staubschutzverschlusselement 24a ist gegen die Vertikalanschlagsfläche 98a elastisch vorgespannt. Das Staubschutzverschlusselement 24a ist gegen die Horizontalanschlagsfläche 102a elastisch vorgespannt. Die Verschlussposition des Staubschutzverschlusselements 24a ist durch die Vertikalanschlagsfläche 98a definiert, von welcher das Staubschutzverschlusselement 24a bei einem Einführen des Steckers 12a in der Steckerverbindungsöffnung 78a federelastisch selbstrückstellend ausgebildet ist. Die Verschlussposition des Staubschutzverschlusselements 24a ist durch die Horizontalanschlagsfläche 102a definiert, von welcher das Staubschutzverschlusselement 24a bei einem Einführen eines Steckers 12a in der Steckerverbindungsöffnung 78a federelastisch selbstrückstellend ausgebildet ist.

Das Grundgehäuse 60a bildet zumindest eine Vertiefung 100a aus, welche die zumindest eine Horizontalanschlagsfläche 102a erzeugt. Die Vertiefung 100a ist durch eine abschnittsweise Verdünnung der Horizontalaußenwand 118a des Grundgehäuses 60a gebildet. Eine Kante der Vertiefung 100a bildet die Horizontalanschlagsfläche 102a. Die Vertiefung 100a für die Horizontalanschlagsfläche 102a erstreckt sich über den gesamten Schwenkbereich des Staubschutzverschlusselements 24a. Der Horizontal-Endbereich 56a des Staubschutzverschlusselements 24a ist über den gesamten Schwenkbereich von der Verschlussposition zu der Öffnungsposition des Staubschutzverschlusselements 24a in der Vertiefung 100a angeordnet. Die Vertiefung 100a für die Horizontalanschlagsfläche 102a ist zumindest näherungsweise gemäß einer halben Gingkoblatt-Form. Die Vertiefung 100a der Horizontalanschlagsfläche 102a des Staubschutzverschlusselements 24a und eine weitere Vertiefung 100a einer weiteren Horizontalanschlagsfläche 102a des weiteren Staubschutzverschlusselements 24a sind gemeinsam zumindest näherungsweise gingkoblatt-förmig ausgestaltet.

Das Grundgehäuse 60a bildet zumindest eine Vertiefung 96a aus, welche die Vertikalanschlagsfläche 98a erzeugt. Die Vertiefung 96a ist durch eine Abschnittsweise Verdünnung der Vertikalaußenwand 116a des Grundgehäuses 60a gebildet. Eine Kante der Vertiefung 96a bildet die Vertikalanschlagsfläche 98a. Der Vertikal-Endbereich 54a des Staubschutzverschlusselements 24a ist bei der Schwenkbewegung zumindest ausgehend von der Verschlussposition abschnittsweise in der Vertiefung 96a angeordnet. Der Vertikal-Endbereich 54a ist zu einem Schwenken aus der Vertiefung 96a während der Schwenkbewegung vorgesehen. Die Vertiefung 96a, welche die Vertikalanschlagsfläche 98a bildet, bildet die Unterbrechung der Vertikalführungsfläche 94a.

Fig. 4 zeigt eine Schnittansicht des faseroptischen Adapters 10a und des Steckers 12a, wobei der Stecker 12a vollständig in der Steckerverbindungsöffnung 78a angeordnet ist. Das Grundgehäuse 60a weist einen Grundrahmen 128a auf. Der Grundrahmen 128a des Grundgehäuses 60a begrenzt die Steckerverbindungsöffnung 78a in Einsteckrichtung betrachtet von vier Seiten. Das Grundgehäuse 60a ist so ausgestaltet, dass der Grundrahmen 128a an dem Steckereingang 86a des Grundgehäuses 60a angeordnet ist, der den Stecker 12a in Einsteckrichtung betrachtet von vier Seiten begrenzt. Der Grundrahmen 128a stützt im Steckereingang 86a den Stecker 12a in allen zur Einsteckachse senkrechten Richtungen. Der Grundrahmen 128a weist mit dem Stecker 12a während des gesamten Einsteckvorgangs und in einem vollständig verbundenen Zustand auf allen vier Seiten zumindest in einem Teilbereich jeder Seite eines Steckerkörpers 180a des Steckers 12a einen direkten Kontakt auf. Der Grundrahmen 128a erstreckt sich über zumindest einen Teilbereich der Steckerverbindungsöffnung 78a. Der Grundrahmen 128a erstreckt sich über zumindest 20 % der Steckerverbindungsöffnung 78a von dem Steckereingang 86a bis zu dem Steckeranschlag 120a.

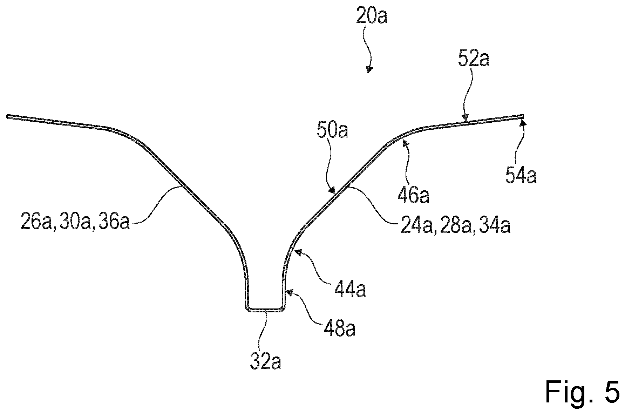

Fig. 5 zeigt die Schutzeinheit 20a, zumindest mit dem Staubschutzverschlusselement 24a, dem Laserschutzelement 28a und dem Befestigungselement 32a. Das Staubschutzverschlusselement 24a weist eine Form auf, welche ein bezüglich einer Ferrule 184a des Steckers 12a und dem Staubschutzverschlusselement 24a berührungsfreies Einführen des Steckers 12a in das Grundgehäuse 60a ermöglicht. Das Staubschutzverschlusselement 24a weist entlang der horizontalen Erstreckung des Staubschutzverschlusselements 24a betrachtet zumindest einen Bogenteil 44a, 46a auf. Das Staubschutzverschlusselement 24a weist entlang der horizontalen Erstreckung des Staubschutzverschlusselements 24a betrachtet zumindest zwei Bogenteile 44a, 46a auf. Das Staubschutzverschlusselement 24a weist entlang der horizontalen Erstreckung des Staubschutzverschlusselements 24a betrachtet zumindest ein Linearteil 48a, 50a, 52a auf. Das Staubschutzverschlusselement 24a weist entlang der horizontalen Erstreckung des Staubschutzverschlusselements 24a betrachtet zumindest drei Linearteile 48a, 50a, 52a auf. Das ausgehend von der Trennwand 114a des Grundgehäuses 60a erste Linearteil 48a des Staubschutzverschlusselements 24a ist an der Trennwand 114a anliegend ausgebildet. Das ausgehend von der Trennwand 114a des Grundgehäuses 60a erste Bogenteil 44a des Staubschutzverschlusselements 24a ist zumindest im Wesentlichen ausgehend von der Trennwand 114a ausgebildet. Das ausgehend von der Trennwand 114a des Grundgehäuses 60a zweite Bogenteil 46a des Staubschutzverschlusselements 24a ist zumindest näherungsweise in einem Mittelbereich der Steckerverbindungsöffnung 78a ist.

Der zumindest eine Bogenteil 44a, 46a des Staubschutzverschlusselements 24a ist bei einem Einsteckvorgang dazu vorgesehen, ein Aufbiegen des Staubschutzverschlusselements 24a bereitzustellen. Ist der Stecker 12a vollständig in der Steckerverbindungsöffnung 78a angeordnet ist, der zumindest eine Bogenteil 44a, 46a des Staubschutzverschlusselements 24a zumindest näherungsweise linear. Ist der Stecker 12a vollständig in der Steckerverbindungsöffnung 78a angeordnet, ist das Staubschutzverschlusselement 24a zumindest näherungsweise linear. Ein Zentriwinkel des ersten Bogenteils 44a des Staubschutzverschlusselements 24a ist in der Verschlussposition des Staubschutzverschlusselements 24a ausgehend von einer Bogenteiltangente, die zumindest näherungsweise parallel zu der Einsteckachse ist, zumindest näherungsweise 45°. Ein Zentriwinkel des zweiten Bogenteils 46a des Staubschutzverschlusselements 24a ist zwischen 40° und 35°. Der zumindest eine Bogenteil 44a, 46a und der zumindest eine Linearteil 48a, 50a, 52a des Staubschutzverschlusselements 24a ist zu dem berührungsfreien Einführen des Steckers 12a bezüglich der Ferrule 184a vorgesehen. Das Staubschutzverschlusselement 24a ist während des Einsteckvorgangs lediglich mit einer Kante des Steckerkörpers 180a des Steckers 12a in Kontakt. Das Horizontalführungselement 34a führt den Stecker 12a in der horizontalen Ebene lediglich über die Kante des Steckerkörpers 180a.

Bei dem Einsteckvorgang wird der Stecker 12a in die Steckerverbindungsöffnung 78a geführt. Bei dem Einsteckvorgang wird das Staubschutzverschlusselement 24a aufgebogen. Bei dem Einsteckvorgang wird das Staubschutzverschlusselement 24a zumindest näherungsweise linear an die Trennwand 114a des Grundgehäuses 60a gebogen. Bei dem Einsteckvorgang wird das Staubschutzverschlusselement 24a, insbesondere das Horizontalführungselement 34a, über das Führungselement 92a des Grundgehäuses 60a gestreckt und eine horizontale Führung bereitgestellt. Bei dem Einsteckvorgang wird der Vertikal-Endbereich 54a des Staubschutzverschlusselements 24a aus der Vertiefung 96a, die die Vertikalanschlagsfläche 98a bildet, geführt. Bei dem Einsteckvorgang wird der Horizontal-Endbereich 56a des Staubschutzverschlusselements 24a in der Vertiefung 100a der Horizontalanschlagsfläche 102a geführt. Bei dem Einsteckvorgang wird der Stecker 12a über die Vertikalführungsfläche 94a als Auflagefläche geführt.

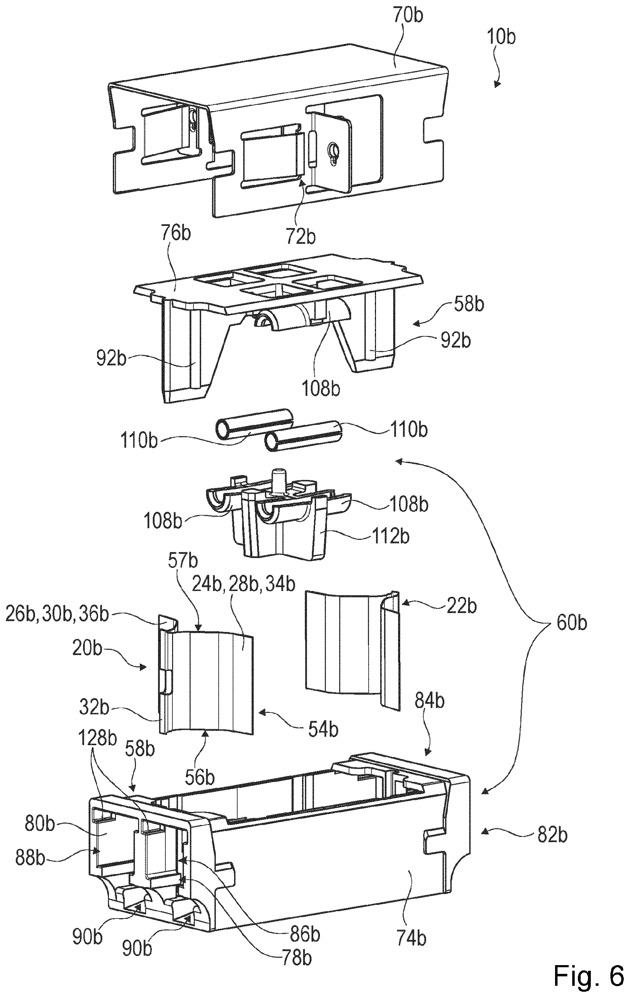

In den Figuren 6 bis 12 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 14 ist der Buchstabe a durch die Buchstaben b bis f ersetzt.

Fig. 6 zeigt eine Explosionsdarstellung eines alternativen faseroptischen Adapters 10b, mit einem Grundgehäuse 60b und zumindest einer Schutzeinheit 20b, wobei der faseroptische Adapter 10b einseitig montierbar ausgestaltet ist. Der faseroptische Adapter 10b ist in einer Ebene senkreckt zu einer Einsteckachse eines Steckers 12b einseitig montierbar. Eine Steckerverbindungsöffnung 78b des Grundgehäuses 60b ist für die Montage zumindest im Wesentlichen vollständig frei zugänglich. Die Steckerverbindungsöffnung 78b ist mit Ausnahme eines Grundrahmens 128a des Grundgehäuses 60b vollständig frei zugänglich. Das Grundgehäuse 60b weist zumindest einen Grundkörper 74b auf. Der Grundkörper 74b stellt eine einseitige Montierung des faseroptischen Adapters 10b bereit.

Der Grundkörper 74b ist dazu ausgebildet, ein vertikales Einführen sämtlicher Elemente des faseroptischen Adapters 10b bereitzustellen. Der Grundkörper 74b ist dazu ausgebildet, ein vertikales Einführen der Schutzeinheit 20b bereitzustellen. Ein Befestigungselement 32b der Schutzeinheit 20b ist nach dem vertikalen Einführen der Schutzeinheit 20b um ein proximales Ende einer Trennwand 114b des faseroptischen Adapters 10b gelegt. Ein Staubschutzverschlusselement 24b ist nach dem vertikalen Einführen der Schutzeinheit 20b in einer Verschlussposition über die Steckverbindungsöffnung gelegt.

Eine Leiterführung 108b des Grundgehäuses 60b, welche zur Aufnahme einer Ferrule 184b des Steckers 12b vorgesehen ist, ist zweiteilig ausgeführt. Die Leiterführung 108b ist in einer horizontalen Mittelebene geteilt. Das Grundgehäuse 60b weist zumindest ein Leiterführungsgehäuse 112b auf. Das Leiterführungsgehäuse 112b stellt ein zu der Einsteckachse vertikales Einführen von Leiterführungshülsen 110b in die Leiterführung 108b bereit. Das Leiterführungsgehäuse 112b stellt einen Steckeranschlag 120b der Steckerverbindungsöffnung 78b bereit. Das Leiterführungsgehäuse 112b ist zu einem vertikalen Einführen in den Grundkörper 74b vorgesehen. Die Leiterführungshülsen 110b sind zu einem vertikalen Einführen in das Leiterführungsgehäuse 112b vorgesehen. Das Grundgehäuse 60b weist einen Deckel 76b auf. Der Deckel 76b bildet zumindest eine zweite Hälfte der Leiterführung 108b. Der Deckel 76b ist zu einem vertikalen Einführen in den Grundkörper 74b vorgesehen. Ist der Deckel 76b auf dem Grundgehäuse 60b aufgesetzt, ist die Leiterführungshülse 110b von der Leiterführung 108b des Leiterführungsgehäuses 112b und der Leiterführung 108b des Deckels 76b umschlossen.

Der faseroptische Adapter 10b weist zumindest einen aufclippbaren Rahmen 70b auf. Der aufclippbare Rahmen 70b ist vertikal auf das Grundgehäuse 60b führbar ausgestaltet. Das Grundgehäuse 60b weist eine Aufnahme für den aufclippbaren Rahmen 70b auf, die das vertikale Aufführen des aufclippbaren Rahmens 70b bereitstellt.

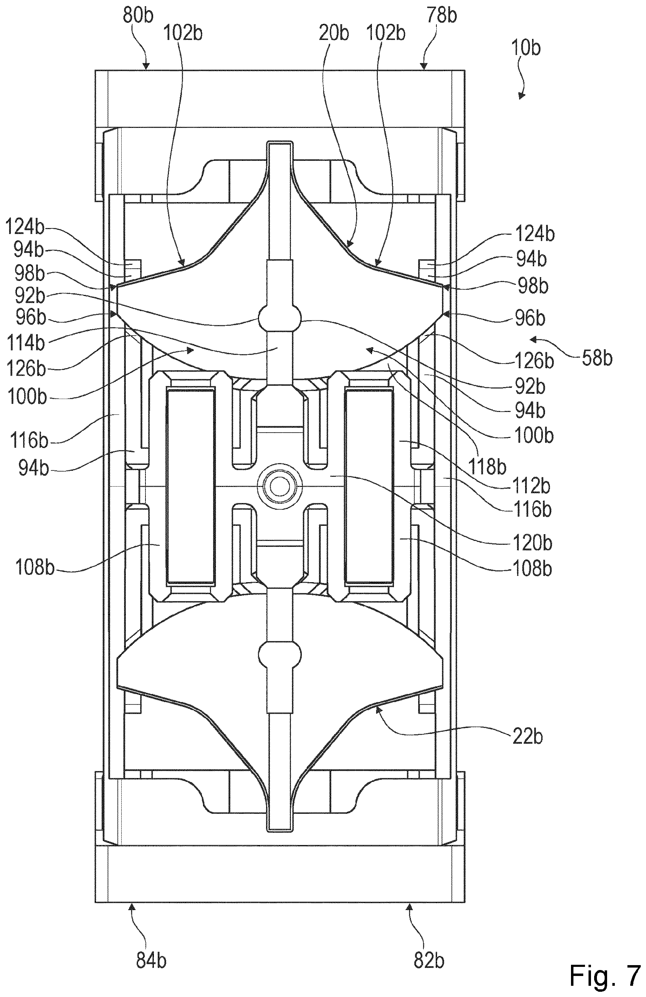

Fig. 7 zeigt eine Schnittansicht des alternativen faseroptischen Adapters 10b, mit dem Grundgehäuse 60b und mit der darin montierten Schutzeinheit 20b. Der Deckel 76b weist zumindest ein Führungselement 92b auf. Die Führungselemente 92b sind als Rundungen ausgebildet. Ein Horizontalführungselement 34b der Schutzeinheit 20b ist bei einem Einsteckvorgang dazu vorgesehen, eine horizontale Führung des Steckers 12b bereitzustellen. Das Horizontalführungselement 34b ist dazu vorgesehen, bei einem Einsteckvorgang durch ein Biegen über die als Rundungen ausgebildeten Führungselemente 92b die horizontale Führung bereitzustellen.

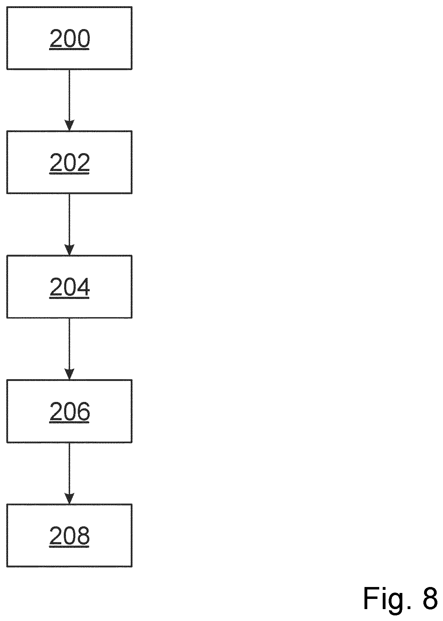

Fig. 8 zeigt ein Verfahren zur Herstellung eines faseroptischen Adapters 10b. Der faseroptische Adapter 10b wird einseitig montiert. Sämtliche Einzelteile des faseroptischen Adapters 10b werden nacheinander vertikal montiert. Sämtliche Einzelteile des faseroptischen Adapters 10b werden in den Grundkörper 74b des Grundgehäuses 60b eingeführt. In zumindest einem ersten Verfahrensschritt 200b wird das Staubschutzverschlusselement 24b in den Grundkörper 74b des Grundgehäuses 60b geführt. Das Befestigungselement 32b der Schutzeinheit 20b wird durch das vertikale Einführen um das proximale Ende einer Trennwand 114b des Grundgehäuses 60b geführt. Das Staubschutzverschlusselement 24b wird in der Verschlussposition über die Steckerverbindungsöffnung 78b gelegt. In zumindest einem weiteren Verfahrensschritt 202b wird das Leiterführungsgehäuse 112b vertikal in den Grundkörper 74b des Grundgehäuses 60b geführt. In zumindest einem weiteren Verfahrensschritt 204b wird die Leiterführungshülse 110b vertikal in die Hälfte der Leiterführung 108b des Leiterführungsgehäuses 112b gelegt. In zumindest einem weiteren Verfahrensschritt 206b wird der Deckel 76b des Grundgehäuses 60b zum Schließen des Grundgehäuses 60b auf den Grundkörper 74b des Grundgehäuses 60b montiert. Mit dem Deckel 76b wird in dem Verfahrensschritt 206b die Leiterführung 108b für die Leiterführungshülse 110b geschlossen. In zumindest einem weiteren Verfahrensschritt 208b wird der aufclippbare Rahmen 70b auf das Grundgehäuse 60b über den Deckel 76b geführt.

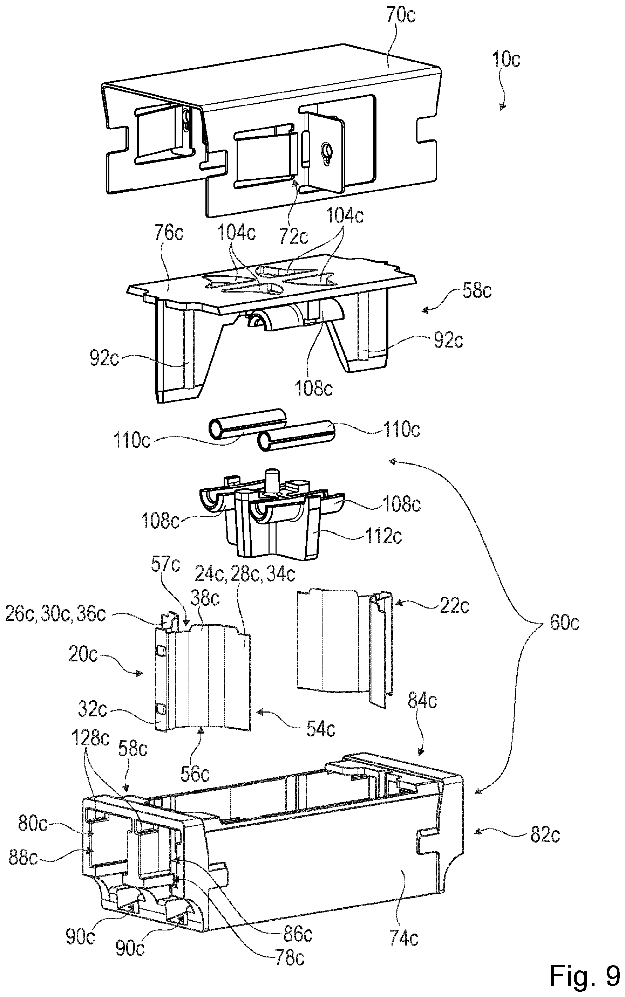

Fig. 9 zeigt eine Explosionsdarstellung eines weiteren alternativen faseroptischen Adapters 10c, mit einem Grundgehäuse 60c und zumindest einer Schutzeinheit 20c, wobei das Grundgehäuse 60c Ausnehmungen 104c für zumindest ein Teil der Schutzeinheit 20c aufweist. Das Grundgehäuse 60c bildet zumindest eine Ausnehmung 104c aus, welche zumindest eine Horizontalanschlagsfläche 106c erzeugt. Das Grundgehäuse 60c weist zwei Horizontalaußenwandungen auf, wobei beide Horizontalaußenwandungen des Grundgehäuses 60c jeweils eine Horizontanschlagsfläche aufweisen. Die weitere Horizontalanschlagsfläche 106c ist als Ausnehmung 104c ausgebildet. Die Ausnehmung 104c ist in der Horizontalaußenwandung 117c des Grundgehäuses 60c, auf einer einer Seite einer Rastaufnahme 90c gegenüberliegenden Seite, ausgebildet. Ein Deckel 76c des Grundgehäuses 60c weist die Ausnehmung 104c auf. Eine durch die Ausnehmung 104c gebildete Kante bildet die weitere Horizontalanschlagsfläche 106c aus.

Die Schutzeinheit 20c weist zumindest ein Staubschutzverschlusselement 24c auf. Das Staubschutzverschlusselement 24c ist zu einem staubdichten Verschließen einer Steckerverbindungsöffnung 78c des Grundgehäuses 60c zumindest durch ein Abdichten mit zumindest einer Anschlagsfläche vorgesehen. Das Staubschutzverschlusselement 24c weist ein Anschlagsteil 38c auf. Das Anschlagsteil 38c ist zu einem Anschlag mit der durch die Ausnehmung 104c gebildeten Horizontalanschlagsfläche 106c vorgesehen. Das Anschlagsteil 38c ist ausgehend von einer horizontalen Kante des Staubschutzverschlusselements 24c innerhalb des Grundgehäuses 60c als Auswölbung ausgebildet. Der Anschlagsteil 38c ist in einem weiteren Horizontal-Endbereich 57c des Staubschutzverschlusselements 24c angeordnet.

Der faseroptische Adapter 10c weist einen aufclippbaren Rahmen 70c auf. Der aufclippbare Rahmen 70c ist zumindest dazu vorgesehen ist, die Ausnehmung 104c des Grundgehäuses 60c staubdicht zu verschließen.

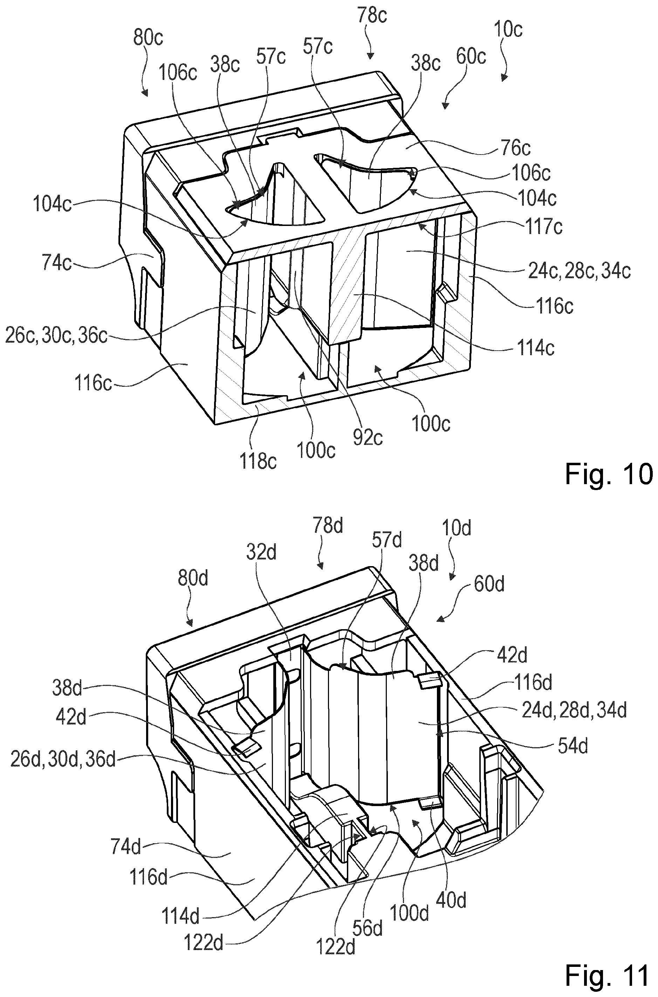

Fig. 10 zeigt eine Schnittansicht des weiteren alternativen faseroptischen Adapters 10c, mit dem Grundgehäuse 60c und der darin montierten Schutzeinheit 20c. Das Anschlagsteil 38c des Staubschutzverschlusselements 24c der Schutzeinheit 20c ist in der Ausnehmung 104c angeordnet. Das Anschlagsteil 38c erstreckt sich über den Innenbereich des Grundgehäuses 60c hinaus. Das Anschlagsteil 38c des Staubschutzverschlusselements 24c ist über einen gesamten Schwenkbereich des Staubschutzverschlusselements 24c von der Verschlussposition bis zu einer Öffnungsposition in der Ausnehmung 104c angeordnet. Das Staubschutzverschlusselement 24c ist zumindest zum Teil gegenüber der durch die Ausnehmung 104c gebildeten Horizontalanschlagsfläche 106c elastisch vorgespannt.

Das Grundgehäuse 60c weist eine Vertikalanschlagsfläche 96c zu einem Anschlag eines Vertikal-Endbereichs 94c des Staubschutzverschlusselements 24c in der Verschlussposition auf. Die Vertikalanschlagsfläche 96c ist gemeinsam mit den Horizontalanschlagsflächen 102c, 108c zu einer Erzeugung einer zumindest zu einem Großteil umlaufenden Abdichtung in der Verschlussposition des Staubschutzverschlusselements 24c vorgesehen. Auf zumindest drei Seiten der Steckerverbindungsöffnung 78c weist das Grundgehäuse 60c eine Vertikalanschlagsfläche 96c oder eine Horizontalanschlagsfläche 102c, 108c auf, die zumindest durch ein Überlappen die Steckerverbindungsöffnung 78c staubdicht verschließt. Die Steckerverbindungsöffnung 78c ist auf Seite der Trennwand 114c durch das Befestigungselement 32c der Schutzeinheit 20c abgedichtet. Die Steckerverbindungsöffnung 78c ist auf der Seite der Trennwand 114c durch das Umbiegen des Befestigungsbereichs um den proximalen Endbereich der Trennwand 114c abgedichtet. Das Staubschutzverschlusselement 24c ist auf allen vier Seiten der Steckerverbindungsöffnung 78c über eine Anschlagsfläche oder durch eine Befestigung abgedichtet.

Fig. 11 zeigt eine Schnittansicht eines weiteren alternativen faseroptischen Adapters 10d, mit einem Teil eines Grundgehäuses 60d und einer Schutzeinheit 20d, wobei die Schutzeinheit 20d zumindest einen Gleitschuh 40d aufweist. Die Schutzeinheit 20d weist zumindest ein Staubschutzverschlusselement 24d auf. Das Staubschutzverschlusselement 24d weist zumindest den Gleitschuh 40d auf. Der Gleitschuh 40d ist zu einer reibungsarmen Interaktion zwischen dem als Blechbiegeteil ausgebildeten Staubschutzverschlusselement 24d und einer Horizontalaußenwandung 116d eines Innenbereichs des Grundgehäuses 60d vorgesehen. Der Gleitschuh 40d ist aus einem Blechbiegeteil des Staubschutzverschlusselements 24d geformt. Der Gleitschuh 40d ist an einem Horizontal-Endbereich 56d des Staubschutzverschlusselements 24d angeordnet. Der Gleitschuh 40d ist in Richtung des Innenbereichs, gegenüberliegend von der Horizontalanschlagsfläche 102d, an dem Horizontal-Endbereich 56d des Staubschutzverschlusselements 24d angeordnet. Der Gleitschuh 40d ist zu dem Gleiten in einer Vertiefung 100d der Horizontalanschlagsfläche 102d vorgesehen. Der Gleitschuh 40d ist zumindest näherungsweise an einem Vertikal-Endbereich 54d des Staubschutzverschlusselements 24d angeordnet. Der Gleitschuh 40d ist ein nach innen abgewinkeltes Blechteil des Staubschutzverschlusselements 24d, wobei eine von einer Kante verschiedene Fläche des Gleitschuhs 40d zu dem Gleiten vorgesehen ist.

Das Staubschutzverschlusselement 24d weist zumindest einen weiteren Gleitschuh 42d auf. Der weitere Gleitschuh 42d ist zu einer reibungsarmen Interaktion zwischen dem als Blechbiegeteil ausgebildeten Staubschutzverschlusselement 24d und einer der Horizontalaußenwandung 116d gegenüberliegenden Horizontalaußenwandung 117d des Grundgehäuses 60d vorgesehen. Der weitere Gleitschuh 42d ist auf einer Seite des Staubschutzverschlusselements 24d angeordnet, der ein Anschlagteil aufweist. Der weitere Gleitschuh 42d ist zumindest näherungsweise an einem Vertikal-Endbereich 54d des Staubschutzverschlusselements 24d angeordnet. Der weitere Gleitschuh 42d ist als ein nach innen abgewinkeltes Blechteil des Staubschutzverschlusselements 24d ausgebildet, wobei eine von einer Kante verschiedene Fläche des weiteren Gleitschuhs 42d zu dem Gleiten vorgesehen ist.

Das Grundgehäuse 60d weist zumindest eine Gleitschuhaufnahme 122d zu einer Aufnahme des Gleitschuhs 40d in einer Öffnungsposition des Staubschutzverschlusselements 24d auf. Eine Trennwand 114d des Grundgehäuses 60d weist die Gleitschuhaufnahme 122d zu der Aufnahme des Gleitschuhs 40d in der Öffnungsposition des Staubschutzverschlusselements 24d auf. Die Gleitschuhaufnahme 122d zu der Aufnahme des Gleitschuhs 40d ist dazu vorgesehen, ein zumindest näherungsweises lineares Anliegen des Staubschutzverschlusselements 24d gegen die Trennwand 114d bereitzustellen. Die Gleitschuhaufnahme 122d ist als eine Ausnehmung in der Trennwand 114d ausgebildet. Die Trennwand 114 des Grundgehäuses 60d weist eine weitere Gleitschuhaufnahme 122d zu der Aufnahme des weiteren Gleitschuhs 42d in der Öffnungsposition des Staubschutzverschlusselements 24d auf. Die weitere Gleitschuhaufnahme 122d ist als eine Ausnehmung in der Trennwand 114d ausgebildet. Die Gleitschuhaufnahme 122d zu der Aufnahme des Gleitschuhs 40d und die weitere Gleitschuhaufnahme 122d zu der Aufnahme des weiteren Gleitschuhs 42d sind einteilig ausgebildet. Die Ausnehmung der Trennwand 114d bildet die Gleitschuhaufnahme 122d und die weitere Gleitschuhaufnahme 122d und erstreckt sich zumindest im Wesentlichen über die gesamte Vertikalerstreckung der Trennwand 114d.

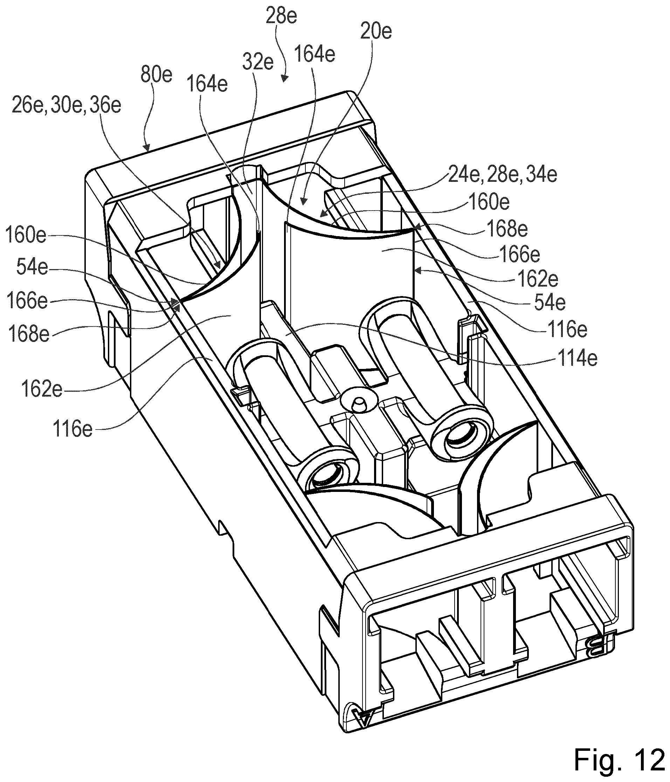

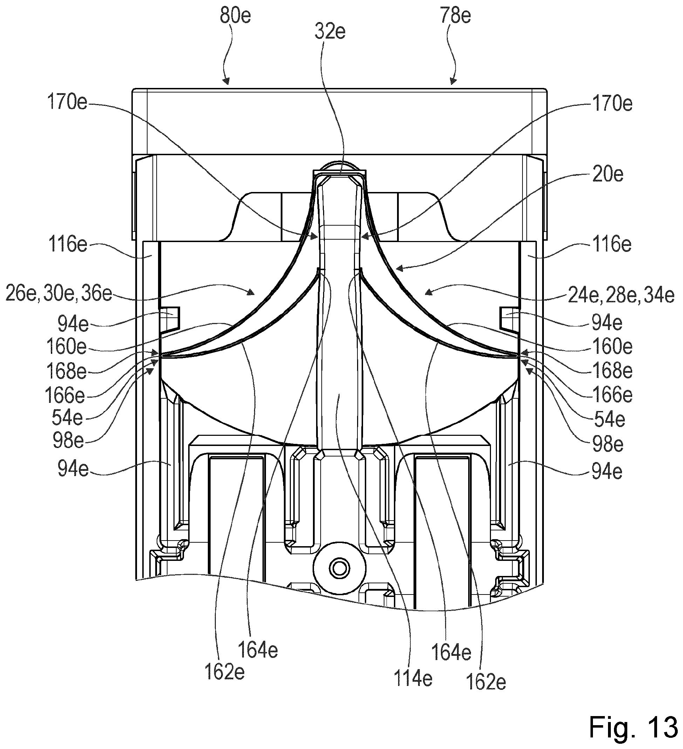

Fig. 12 und 13 zeigen eine weitere alternative Ausgestaltung eines faseroptischen Adapters 10e. Der faseroptische Adapter 10e weist eine Schutzeinheit 20e auf. Die Schutzeinheit 20e weist zumindest ein Staubschutzverschlusselement 24e, 26e auf. Das Staubschutzverschlusselement 24e, 26e weist zumindest zwei Staubschutzverschlussteile 160e, 162e auf. Die Staubschutzverschlussteile 160e, 162e erstrecken sich vollständig über eine Steckerverbindungsöffnung 78e, 80e des faseroptischen Adapters 10e. Das Staubschutzverschlusselement 24e, 26e ist mit den zwei Staubschutzverschlussteilen 160e, 162e doppelwandig ausgeführt. Bei einem Einführen eines Steckers 12e in die Steckerverbindungsöffnung 78e, 80e sind beide Staubschutzverschlussteile 160e, 162e des Staubschutzverschlusselements 24e, 26e entlang einer vertikalen Achse schwenkbar ausgebildet. Bei dem Einführen des Steckers 12e sind die Staubschutzverschlussteile 160e, 162e dazu ausgebildet, sich entlang einer Trennwand 114e eines Grundgehäuses 60e des faseroptischen Adapters 10e zu erstrecken. Der eingangsseitige Staubschutzverschlussteil 160e ist bogenförmig ausgebildet. Der innenseitige Staubschutzverschlussteil 162e ist bogenförmig ausgebildet. Der innenseitige Staubschutzverschlussteil 162e ist einem Steckeranschlag 120e der Steckerverbindungsöffnung 78e, 80e zugewandt. Der eingangsseitige Staubschutzverschlussteil 160e weist einen zumindest im Wesentlichen konstanten Krümmungsradius auf. Der innenseitige Staubschutzverschlussteil 162e weist einen zumindest im Wesentlichen konstanten Krümmungsradius auf. Die Staubschutzverschlussteile 160e, 162e des Staubschutzverschlusselements 24e, 26e sind in die gleiche Richtung gekrümmt.

Das Staubschutzverschlusselement 24e, 26e weist eine U-Biegung 166e auf. Die U-Biegung 166e verbindet die zwei Staubschutzverschlusselemente 24e, 26e und die Staubschutzverschlussteile 160e, 162e. Die U-Biegung 166e ist dazu vorgesehen, einen Anschlag 168e mit einer Vertikalaußenwandung 116e des Grundgehäuses 60e bereitzustellen. Die Staubschutzverschlussteile 160e, 162e sind von der U-Biegung 166e ausgehend divergierend ausgebildet. Der eingangsseitige Staubschutzverschlussteil 160e ist mit einem Befestigungselement 32e der Schutzeinheit 20e verbunden.

Der innenseitige Staubschutzverschlussteil 162e weist ein Gleitteil 164e auf. Das Gleitteil 164e liegt an der Trennwand 114e an. Bei einem Öffnen des Staubschutzverschlusselements 24e, 26e ist das Gleitteil 164e an der Trennwand 114e führbar ausgebildet. Das innenseitige Staubschutzverschlussteil 162e ist zur Bereitstellung eines Anschlagsdrucks bei dem Anschlag 168e des Staubschutzverschlusselements 24e, 26e der U-Biegung 166e, gegen die Vertikalaußenwandung 116e, zwischen der Trennwand 114e und der Vertikalaußenwandung 116e vorgespannt. Die Bogenform des innenseitigen Staubschutzverschlussteils 162e stellt die Vorspannung bereit. Der Gleitteil 164e liegt für die Vorspannung an der Trennwand 114e an. Die Trennwand 114e des Grundgehäuses 60e weist eine Führungsfläche 170e auf, entlang welcher der Gleitteil 164e des Staubschutzverschlusselements 24e, 26e entlanggleitet. Die Trennwand 114e ist in einem Bereich der Führungsfläche 170e zumindest teilweise konvex, insbesondere verjüngend, ausgebildet.

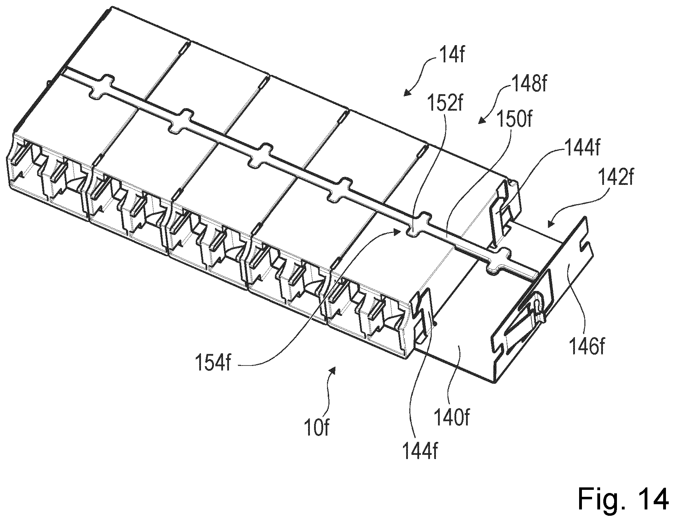

Die Fig. 14 zeigt ein System 14f mit mehreren faseroptischen Adaptern 10f. Das System 14f ist für sechs faseroptische Adapter 10f ausgelegt. Es ist jedoch auch eine Auslegung für eine verschiedene Anzahl an faseroptischen Adaptern 10f, insbesondere mit lediglich zwei faseroptischen Adaptern 10f, denkbar. Das System 14f weist eine Kopplungseinheit 148f auf. Die Kopplungseinheit 148f ist dazu vorgesehen, die faseroptischen Adapter 10f miteinander zu verbinden. Die Kopplungseinheit 148f ist dazu vorgesehen, die faseroptischen Adapter 10f in einer Reihe miteinander zu verbinden. Das System 14f weist einen aufclippbaren Rahmen 140f auf. Der aufclippbare Rahmen 140f bildet zumindest teilweise die Kopplungseinheit 148f. Der aufclippbare Rahmen 140f weist zumindest eine Aufnahme 142f für ein Fixieren des faseroptischen Adapters 10f auf. Der aufclippbare Rahmen 140f weist sechs Aufnahmen 142f auf. Der aufclippbare Rahmen 140f weist Zwischenrahmenelemente 144f auf. Die Aufnahmen 142f für die faseroptischen Adapter 10f sind durch die Zwischenrahmenelemente 144f voneinander getrennt. Die Zwischenrahmenelemente 144f stützen den faseroptischen Adapter 10f in eine Längsrichtung des faseroptischen Adapters 10f. Die Zwischenrahmenelemente 144f stützten den faseroptischen Adapter 10f in dem aufclippbaren Rahmen 140f in Richtung des Einsteckwegs eines faseroptischen Steckverbinders. Der aufclippbare Rahmen 140f umgreift sämtliche faseroptischen Adapter 10f. Der aufclippbare Rahmen 140f umfasst die faseroptischen Adapter 10f, sodass zwei Seitenflächen 146f des aufclippbaren Rahmens 140f, welche jeweils mit einem der faseroptischen Adapter 10f in Kontakt sind, parallel zueinander sind. Der faseroptische Adapter 10f wird bei einer Montage linear in den aufclippbaren Rahmen 140f geführt.

Die Kopplungseinheit 148f weist ein Kopplungselement 150f auf. Das Kopplungselement 150f verbindet die faseroptischen Adapter 10f. Das Kopplungselement 150f verbindet die faseroptischen Adapter 10f mit einem Formschluss. Die faseroptischen Adapter 10f weisen zumindest eine Ausnehmung 154f für einen formschlüssigen Eingriff des Kopplungselements 150f auf. Das Kopplungselement 150f erstreckt sich in einem formschlüssigen Eingriff quer zu den faseroptischen Adaptern 10f. Das Kopplungselement 150f erstreckt sich senkrecht zu der Einsteckrichtung des faseroptischen Steckverbinders. Das Kopplungselement 150f ist zumindest im Wesentlichen stabförmig ausgebildet. Das Kopplungselement 150f ist zumindest näherungsweise knochenförmig ausgebildet. Das Kopplungselement 150f weist sich längs erstreckende Seitenkanten auf, die zumindest abschnittsweise zumindest im Wesentlichen parallel sind. Das Kopplungselement 150f weist zumindest eine Querstrebe 152f auf. Die Querstrebe 152f erstreckt sich senkrecht zu einer Längsachse des Kopplungselements 150f. Das Kopplungselement 150f weist für jeden faseroptischen Adapter 10f eine Querstrebe 152f auf. Das Kopplungselement 150f wird bei einer Montage linear auf die faseroptischen Adapter 10f, in die Ausnehmung 154f, geführt.

### Bezugszeichen

- 10: Faseroptischer Adapter
- 12: Stecker
- 14: System
- 20: Schutzeinheit
- 22: Schutzeinheit
- 24: Staubschutzverschlusselement
- 26: Staubschutzverschlusselement
- 28: Laserschutzelement
- 30: Laserschutzelement
- 32: Befestigungselement
- 34: Horizontalführungselement
- 36: Horizontalführungselement
- 38: Anschlagsteil
- 40: Gleitschuh
- 42: Gleitschuh
- 44: Bogenteil
- 46: Bogenteil
- 48: Linearteil
- 50: Linearteil
- 52: Linearteil
- 54: Vertikal-Endbereich
- 56: Horizontal-Endbereich
- 57: Horizontal-Endbereich
- 58: Führungseinheit
- 60: Grundgehäuse
- 70: Aufclippbarer Rahmen
- 72: Clip
- 74: Grundkörper
- 76: Deckel
- 78: Steckerverbindungsöffnung
- 80: Steckerverbindungsöffnung
- 82: Steckerverbindungsöffnung
- 84: Steckerverbindungsöffnung
- 86: Steckereingang
- 88: Steckereingang
- 90: Rastaufnahme
- 92: Führungselement
- 94: Vertikalführungsfläche
- 96: Vertiefung
- 98: Vertikalanschlagsfläche
- 100: Vertiefung
- 102: Horizontalanschlagsfläche
- 104: Ausnehmung
- 106: Horizontalanschlagsfläche
- 108: Leiterführung
- 110: Leiterführungshülse
- 112: Leiterführungsgehäuse
- 114: Trennwand
- 116: Vertikalaußenwand
- 117: Horizontalaußenwandung
- 118: Horizontalaußenwandung
- 120: Steckeranschlag
- 122: Gleitschuhaufnahme
- 124: Fase
- 126: Fase
- 128: Grundrahmen
- 140: Rahmen
- 142: Aufnahme
- 144: Zwischenrahmenelement
- 146: Seitenfläche
- 148: Kopplungseinheit
- 150: Kopplungselement
- 152: Querstrebe
- 154: Ausnehmung
- 160: Staubschutzverschlussteil
- 162: Staubschutzverschlussteil
- 164: Gleitelement
- 166: U-Biegung
- 168: Anschlag
- 170: Führungsfläche
- 180: Steckerkörper
- 182: Lichtwellenleiter
- 184: Ferrule
- 186: Rastelement
- 200: Verfahrensschritt
- 202: Verfahrensschritt
- 204: Verfahrensschritt
- 206: Verfahrensschritt
- 208: Verfahrensschritt

## Patentansprüche

1. Faseroptischer Adapter (10a-f) mit zumindest einem Grundgehäuse (60a-f), welches zumindest eine Steckerverbindungsöffnung (78a-f, 80a-f, 82a-f, 84a-f) zum Einführen eines Steckers (12a-f) in das Grundgehäuse (60a-f) aufweist, und mit einer an dem Grundgehäuse (60a-f) angeordneten Schutzeinheit (20a-f, 20a-f), welche zumindest ein Staubschutzverschlusselement (24a-f, 26a-f) zu einem staubdichten Verschließen der Steckerverbindungsöffnung (78a-f, 80a-f, 82a-f, 84a-f) aufweist, **dadurch gekennzeichnet, dass** das Staubschutzverschlusselement (24a-f, 26a-f) federelastisch und in eine Verschlussposition des Staubschutzverschlusselements (24a-f, 26a-f) an der Steckerverbindungsöffnung (78a-f, 80a-f, 82a-f, 84a-f) selbstrückstellend ausgebildet ist.

2. Faseroptischer Adapter (10a-f) nach Anspruch 1, **dadurch gekennzeichnet, dass** die Schutzeinheit (20a-f, 22a-f) zumindest ein Laserschutzelement (28a-f, 30a-f) aufweist, wobei das Laserschutzelement (28a-f, 30a-f) einstückig mit dem Staubschutzverschlusselement (24a-f, 26a-f) ausgebildet ist.

3. Faseroptischer Adapter (10a-f) nach Anspruch 1 oder 2, **dadurch gekennzeichnet, dass** das Staubschutzverschlusselement (24a-f, 26a-f) in der Verschlussposition elastisch vorgespannt ist.

4. Faseroptischer Adapter (10a-f) nach einem der vorhergehenden Ansprüche, **dadurch gekennzeichnet, dass** die Schutzeinheit (20a-f, 22a-f) als ein monolithisches Bauteil, insbesondere Blechbiegeteil, ausgebildet ist.

5. Faseroptischer Adapter (10a-f) nach einem der vorhergehenden Ansprüche, **gekennzeichnet durch** eine Führungseinheit (58a-f) zur Führung des Steckers (12a-f) bei einem Einführen des Steckers (12a-f) in das Grundgehäuse (60a-f), mit zumindest einem Horizontalführungselement (34a-f, 36a-f), welches durch das Staubschutzverschlusselement (24a-f, 26a-f) gebildet ist.

6. Faseroptischer Adapter (10a-f) nach einem der vorhergehenden Ansprüche, **dadurch gekennzeichnet, dass** das Grundgehäuse (60a-f) zumindest eine weitere Steckerverbindungsöffnung (80a-f, 84a-f) aufweist, wobei die weitere Steckerverbindungsöffnung (80a-f, 84a-f) mit einem weiteren Staubschutzverschlusselement (26a-f) der Schutzeinheit (20a-f, 22a-f) staubdicht verschließbar ist.

7. Faseroptischer Adapter (10a-f) nach einem der vorhergehenden Ansprüche, **dadurch gekennzeichnet, dass** das Staubschutzverschlusselement (24a-f, 26a-f) eine Form aufweist, welche ein bezüglich einer Ferrule (184a-f) des Steckers (12a-f) und dem Staubschutzverschlusselement (24a-f, 26a-f) berührungsfreies Einführen des Steckers (12a-f) in das Grundgehäuse (60a-f) ermöglicht.

8. Faseroptischer Adapter (10a-f) nach einem der vorhergehenden Ansprüche, **gekennzeichnet durch** eine Führungseinheit (58a-f) zur Führung des Steckers (12a-f) bei einem Einführen des Steckers (12a-f) in das Grundgehäuse (60a-f), wobei das Grundgehäuse (60a-f) eine Vertikalführungsfläche (94a-f) aufweist, welche zumindest eine öffnungsseitig angeordnete Fase (124a-f, 126a-f) aufweist.

9. Faseroptischer Adapter (10a-f) nach einem der vorhergehenden Ansprüche, **dadurch gekennzeichnet, dass** ein Grundrahmen (128a-f) des Grundgehäuses (60a-f) die Steckerverbindungsöffnung (78a-f, 80a-f, 82a-f, 84a-f) in Einsteckrichtung betrachtet von vier Seiten begrenzt.

10. Faseroptischer Adapter (10a-f) nach einem der vorhergehenden Ansprüche, **dadurch gekennzeichnet, dass** das Grundgehäuse (60a-f) eine, insbesondere über eine zumindest im Wesentlichen gesamte Vertikalerstreckung des Staubschutzverschlusselements (24a-f, 26a-f) erstreckte, Vertikalanschlagsfläche (98a-f) für einen Vertikal-Endbereich (54a-f) des Staubschutzverschlusselements (24a-f, 26a-f) in der Verschlussposition ausbildet.

11. Faseroptischer Adapter (10a-f) nach einem der vorhergehenden Ansprüche, **dadurch gekennzeichnet, dass** das Grundgehäuse (60a-f) zumindest eine Horizontalanschlagsfläche (102a-f, 106c-f) für einen Horizontal-Endbereich (56a-f, 57a-f) des Staubschutzverschlusselements (24a-f, 26a-f) in der Verschlussposition ausbildet.

12. Faseroptischer Adapter (10a-f) nach den Ansprüchen 10 und 11, **dadurch gekennzeichnet, dass** die Vertikalanschlagsfläche (98a-f) gemeinsam mit Horizontalanschlagsflächen (102a-f, 106c-f) zu einer Erzeugung einer zumindest zu einem Großteil umlaufenden Abdichtung in der Verschlussposition des Staubschutzverschlusselements (24a-f, 26a-f) vorgesehen ist.

13. Faseroptischer Adapter (10a-f) nach einem der Ansprüche 10 bis 12, **dadurch gekennzeichnet, dass** das Grundgehäuse (60a-f) zumindest eine Ausnehmung (104c-f) oder Vertiefung (94a-f, 100a-f) ausbildet, welche die zumindest eine Horizontalanschlagsfläche (102a-f, 106c-f) und/oder die Vertikalanschlagsfläche (98a-f) erzeugt.

14. Faseroptischer Adapter (10d) nach einem der vorhergehenden Ansprüche, **dadurch gekennzeichnet, dass** das Staubschutzverschlusselement (24d, 26d) zumindest einen Gleitschuh (40d) aufweist.

15. Schutzeinheit (20a-f, 22a-f) für einen faseroptischen Adapter (10a-f) nach einem der vorhergehenden Ansprüche.

16. Verfahren zur Herstellung eines faseroptischen Adapters (10b-f), insbesondere nach einem der Ansprüche 1 bis 14, **dadurch gekennzeichnet, dass** der faseroptische Adapter (10b-f) einseitig montiert wird.
